# EUROPEAN PATENT SPECIFICATION

(11) **EP 1 707 803 B1**
(45) Date of publication and mention of the grant of the patent: **08.06.2011**
(21) Application number: 06005868.2
(22) Date of filing: 22.03.2006
(51) Int. Cl.: F02N 11/08, F02D 41/04, B60W 10/06, B60W 10/10, F02D 41/12, F02N 99/00

(54) **Engine starting system for vehicle**
Motorstartvorrichtung für Kraftfahrzeug
Dispositif de démarrage de moteur de véhicule

(30) Priority: 28.03.2005 JP 2005091668
(43) Date of publication of application: 04.10.2006
(73) Proprietor: Mazda Motor Corporation, Aki-gun, Hiroshima, (JP)
(72) Inventor: Taga, Junichi, Aki-gun Hiroshima (JP); Hosoya, Hideki, Aki-gun Hiroshima (JP); Tetsuno, Masayuki, Aki-gun Hiroshima (JP); Sugiyama, Takanori, Aki-gun Hiroshima (JP); Araki, Keiji, Aki-gun Hiroshima (JP)
(74) Representative: Herrmann, Uwe

(56) References cited:
- EP-A- 1 227 230
- EP-A- 1 512 859
- DE-A1- 4 329 916
- DE-A1-102004 002 706
- DE-C1- 10 104 372
- US-A1- 2004 014 565

## Description

### BACKGROUND OF THE INVENTION

### 1. Field of the Invention

The present invention relates to an engine starting system for automatically stopping an engine during vehicle deceleration or the like, and then automatically starting the stopped engine.

### 2. Description of the Related Art

Late years, with a view to facilitating reductions in fuel consumption and CO₂ emissions, there has been developed an engine starting system intended to automatically stop an engine during idling and then automatically restart the engine in response to satisfaction of a restart condition, such as a driver's operation for starting moving a vehicle.

This engine restarting must be quickly completed in response to satisfaction of the restart condition, and therefore a conventional commonly-used technique designed to start an engine through a cranking process of driving an engine output shaft using a starter (starter motor) is unsuitable therefor because it requires substantial time for completion of restarting.

From this standpoint, it is desirable to inject fuel into a specific cylinder (cylinder in an expansion stroke) of an engine in its stopped state (a cylinder kept in an expansion stroke after stop of an engine will hereinafter be referred to as "expansion-stroke engine" for sake of simplicity) to produce combustion so as to allow the engine to be quickly started based on obtained combustion energy. However, even if fuel is merely supplied to the expansion-stroke engine to produce combustion, a sufficient torque to engine starting cannot be always obtained. A smooth restarting can be achieved only if a sufficient torque is generated based on the combustion.

In this view, it is desirable that a piston of the expansion-stroke engine is stopped in an adequate positional range during restarting. This adequate positional range is generally a crank angle (CA) range of around 90° after a top dead center (ATDC) or a certain CA range adjacent to or slightly deviated from an intermediate position between the top dead center (TDC) and a bottom dead center (BDC). When the piston is stopped within this adequate positional range, a desirable combustion can be obtained based on an in-cylinder air residing in an appropriate volume and a fuel supplied during restarting, to generate a sufficient torque to restarting.

For example, as an engine stop control technique for stopping a piston within the adequate positional range, the following Patent Publication 1 discloses a technique designed to adjust an intake air volume during an engine stop operation to ensure an appropriate volume of in-cylinder air so as to allow a piston to be stopped within the adequate positional range. According to an engine starting system disclosed in the Patent Publication 1, a piston can be accurately stopped within the adequate positional range to achieve enhance restart performance.

From the viewpoint of improving accuracy in engine stop control as disclosed in the Patent Publication 1 of in EP1227230, it is desirable to minimize a disturbance acting on an engine (crankshaft) during an engine stop operation. In this connection, for example, the following Patent Publication 2 discloses a technique designed to disengage a forward clutch of an automatic transmission mechanism (or switching from a drive mode to a neutral mode) when an engine is automatically stopped during running of a vehicle, so as to block influences from driven wheels to the engine.

Through the use of the technique disclosed in the Patent Publication 2, the engine stop control in the Patent Publication 1 can be improved to block the driven wheels-inducing influences as a disturbance factor in the control so as to achieve higher control accuracy. This combinational technique can be expected to provide further enhanced engine restart performance.
[Patent Publication 1] European Patent Laid-Open Publication No. 1403512
[Patent Publication 2] Japanese Patent Laid-Open Publication No. 07-266932

In the above automatic engine stop control, the switching of the automatic transmission mechanism from the drive mode to the neutral mode is likely to cause transient vehicle vibrations. Although the level of the vibrations is generally not so high differently from so-called shock or harshness, the vibrations occurring unexpectedly without any manual operation are likely to bring uncomfortable feeling to a driver and spoil smoothness in running and luxuriousness.

In view of the above circumstances, it is an object of the present invention to provide a vehicle engine starting system capable of switching an automatic transmission mechanism from a drive mode to a neutral mode through an automatic engine stop control to achieve enhanced restart performance while reducing transient vehicle vibrations to be caused by the switching.

### SUMMARY OF THE INVENTION

In order to achieve the above object, the present invention provides an engine starting system for a vehicle, which includes stop/restart control means. The stop/restart control means is operable, in response to satisfaction of an automatic engine stop condition predetermined in a manner capable of being satisfied even during running of the vehicle, to perform an automatic engine stop control configured to interrupt a fuel supply for maintaining engine operation so as to automatically stop an engine. Further, the stop/restart control means is operable, in response to satisfaction of a restart condition for restarting the automatically stopped engine, to produce combustion in at least a cylinder kept in an expansion stroke after stop of the engine so as to automatically restart the engine. The engine starting system is characterized by comprising: an automatic transmission mechanism which is provided with a torque converter and designed to be switchable between a drive mode for permitting transmission of a driving force from the engine to a driven wheel and a neutral mode for precluding transmission of the driving force and to be selectably shifted between a plurality of speed ratios; engine speed detection means for detecting a speed of the engine; and turbine speed detection means for detecting a speed of a turbine of the torque converter. In this engine starting system, the stop/restart control means is operable, in response to satisfaction of the automatic engine stop condition when the automatic transmission mechanism is in the drive mode, to switch the automatic transmission mechanism from the drive mode to the neutral mode in an initial stage of the automatic engine stop control. Further, in conjunction with the switching, the stop/restart control means is operable, in an event where the engine speed detected by the engine speed detection means is greater, by a given value or more, than the turbine speed detected by the turbine speed detection means, to perform a buffering control configured to reduce transient vehicle vibrations to be caused by the switching, and, after the buffering control, to interrupt the fuel supply for maintaining engine operation.

According to the present invention, before the fuel supply is interrupted to automatically stop the engine, the automatic transmission mechanism is switched from the drive mode to the neutral mode, so that influences from the driven wheel during the automatic engine stop control are substantially blocked. This makes it possible to provide higher accuracy of a piston stop position in the automatic engine stop control and achieve enhanced restart performance. In addition, even during running of the vehicle, the piston can be stopped within an adequate positional range with a higher degree of accuracy to broaden the opportunities for performing the automatic engine stop control and facilitate reductions in fuel consumption and CO₂ emissions.

As in the case of the aforementioned conventional technique, the switching of the automatic transmission mechanism from the drive mode to the neutral mode involves the risk of occurrence of transient vehicle vibrations. Through various researches on this problem, the inventors found that such vibrations occur by the following mechanism.

A driving force transmitted from the engine to the driven wheel through the automatic transmission mechanism in the drive mode is cut off by the switching to the neutral mode, and this cutoff operation causes a relatively large negative acceleration (transient deceleration) to result in occurrence of the vibrations. It was also found that such vibrations are not always generated during running of the vehicle, but generated even after stop of the vehicle. Specifically, a certain level of torque is transmitted to a drivetrain extending toward the driven wheel. Thus, in response to the switching to the neutral state, the torque is rapidly released to cause vibrations due to counteractions at respective power-train support points of a vehicle body.

In view of the above vibration generation mechanism, the vibrations are generated when a driving force acts in a direction from the engine to the turbine, i.e. when the engine speed is greater, by a given value or more, than the turbine speed, and the level of vibrations becomes higher as a difference between the engine and turbine speeds is larger.

From this point of view, in the present invention, when the automatic transmission mechanism is switched from the drive mode to the neutral mode under the condition that the engine speed is greater than the turbine speed by a given value or more, transient vehicle vibrations to be caused by the switching are reduced through the buffering control. This makes it possible to effectively suppress uncomfortable feeling which would otherwise be given to a passenger due to the vibrations.

In the engine starting system of the present invention, the buffering control is configured to be activated during running of the vehicle, and includes a speed shift operation for shifting the automatic transmission mechanism between the speed ratios in advance of the switching from the drive mode to the neutral mode, in a manner allowing the turbine speed to be increased.

According to this first preferred embodiment of the present invention, the turbine speed can be increased through the speed shift operation to reduce a difference between the engine and turbine speeds during the switching of the automatic transmission mechanism from the drive mode to the neutral mode. This makes it possible to effectively suppress the above vibrations. More preferably, the turbine speed is increased up to a value greater than the engine speed to eliminate a fundamental factor causing the vibrations.

According to the present invention, the speed shift operation is designed to shift to one of the speed ratios which is assigned to a lower speed stage adapted to permit transmission of the reverse driving force from the driven wheel to the turbine.

As used in this specification, the term "speed ratio for (or assigned to) a lower speed stage (i.e. higher speed ratio)" means a speed ratio which provides a lower driven-wheel speed, or a lower vehicle speed, than that in a speed ratio for (or assigned to) a higher speed stage (i.e. lower speed ratio), as is generally described. Conversely, under the condition of a common vehicle speed, a higher speed ratio can provide a higher turbine speed than that in a lower speed ratio. In this case, a drivetrain has to be designed to permit transmission of the reverse driving force from the driven wheel to the turbine. Because, in a drivetrain designed to cut off (or preclude) transmission of the reverse driving force using, for example, a one-way clutch, even if the speed ratio is shifted to a higher speed ratio, the turbine speed is never increased by the reverse driving force.

According to the above second preferred embodiment of the present invention, the speed ratio is shifted to the speed ratio for a lower speed stage (i.e. higher speed ratio) which permits transmission of the reverse driving force from the driven wheel to the turbine. Thus, the reverse driving force can be reliably transmitted to the turbine to desirably increase the turbine speed.

In the second preferred embodiment of the present invention, the automatic transmission mechanism is designed such that a first speed stage serving as a relatively low speed stage is established by a reverse-driving-force non-transmittable mechanism adapted to preclude transmission of at least the reverse driving force, and a second speed stage serving as a higher speed stage than the first speed stage is established by a reverse-driving-force transmittable mechanism adapted to permit transmission of at least the reverse driving force. Further, the speed shift operation is designed to shift from a higher speed stage than the second speed stage to the second speed stage established by the reverse-driving-force transmittable mechanism.

For example, in a 4-speed stage automatic transmission mechanism having four speed ratios D1 (assigned to the lowest speed stage) to D4 (assigned to the highest speed stage), while the first and second speed stages described in the third preferred embodiment may have D1 and D2, respectively, the present invention is not limited to such a setting. For example, the first and second speed stages may have D2 and D3, respectively. Further, when a continuously variable transmission (CVT) is used as the automatic transmission mechanism, the first speed stage may have a specific speed ratio providing a relatively low output speed (this speed ratio may have a certain range), and the second speed stage may have a lower speed ratio than that of first speed stage (this speed ratio may also have a certain range).

In this third preferred embodiment of the present invention, while the first speed stage is expressed as "established by the reverse-driving-force non-transmittable mechanism adapted to preclude transmission of at least the reverse driving force", this wording does not mean to exclude the use of the reverse-driving-force transmittable mechanism adapted to permit transmission of at least the reverse driving force, but the reverse-driving-force non-transmittable mechanism may be combined with the reverse-driving-force transmittable mechanism in a selectable manner. Similarly, while the second speed stage is expressed as "established by the reverse-driving-force transmittable mechanism adapted to permit transmission of at least the reverse driving force", this wording does not mean to exclude the use of reverse-driving-force non-transmittable mechanism, but the reverse-driving-force transmittable mechanism may be combined with the reverse-driving-force non-transmittable mechanism in a selectable manner.

According to the third preferred embodiment of the present invention, in advance of the switching from the drive mode to the neutral mode, the automatic transmission mechanism is shifted from a higher speed stage than the second speed stage to the second speed stage established by the reverse-driving-force transmittable mechanism. This makes it possible to adequately increase the turbine speed based on the reverse driving force so as to effectively suppress the aforementioned transient vibrations.

Further, the reverse-driving-force non-transmittable mechanism allows a normal vehicle running on the level ground using the first speed stage to be performed without transmission of the reverse driving force. Generally, in such a normal vehicle running on the level ground, an excessive engine braking (caused by transmission of the reverse driving force) using a relatively low speed stage becomes a negative factor against driving feeling. In the third preferred embodiment, such a vehicle running can be performed using the first speed stage established by the reverse-driving-force non-transmittable mechanism to cut off (preclude) transmission of the reverse driving force so as to suppress an engine braking to obtain excellent driving feeling.

That is, according to the third preferred embodiment, a speed stage capable of precluding transmission of the reverse driving force (first speed stage) can be reliably obtained during a low speed running of the vehicle. In addition, when the engine is automatically stopped during running of the vehicle, a speed stage which is a higher speed stage than the first speed stage but a relatively low speed stage can be pre-shifted to a speed stage adapted to permit transmission of the reverse driving force (second speed stage) to effectively suppress the transient vehicle vibration to be caused by the switching from the drive mode and the neutral mode.

In the second preferred embodiment of the present invention, the automatic transmission mechanism may designed such that a first speed stage serving as a relatively low speed stage is established by either one selected from a reverse-driving-force non-transmittable mechanism adapted to preclude transmission of the reverse driving force, and a reverse-driving-force transmittable mechanism adapted to permit transmission of the reverse driving force. Further, the speed shift operation may be designed to shift from a higher speed stage than the first speed stage to the first speed stage established by the reverse-driving-force transmittable mechanism.

According to this fourth preferred embodiment of the present invention, in advance of the switching from the drive mode to the neutral mode, the automatic transmission mechanism is shifted from a higher speed stage than the first speed stage to the first speed stage established by the reverse-driving-force transmittable mechanism. This makes it possible to adequately increase the turbine speed based on the reverse driving force so as to effectively suppress the aforementioned transient vibrations.

Further, when it is desirable to reduce the action of engine braking, for example, during a normal vehicle running on the level ground, the first speed stage established by the reverse-driving-force transmittable mechanism can be selected to cut off (preclude) transmission of the reverse driving force so as to obtain excellent driving feeling.

That is, according to the fourth preferred embodiment, a speed stage capable of precluding transmission of the reverse driving force (first speed stage established by the reverse-driving-force non-transmittable mechanism) can be reliably obtained during a low speed running of the vehicle. In addition, when the engine is automatically stopped during running of the vehicle, the automatic transmission mechanism can be pre-shifted to a speed stage adapted to permit transmission of the reverse driving force (first speed stage established by the reverse-driving-force transmittable mechanism) to effectively suppress the transient vehicle vibration to be caused by the switching from the drive mode and the neutral mode.

In the engine starting system of the present invention, the automatic transmission mechanism may be designed to engage or disengage a frictional engagement element in conjunction with the switching from the drive mode to the neutral mode, and the buffering control is configured to increase a time period of a semi-engaged state during the engagement or disengagement of the frictional engagement element.

According to this fifth preferred embodiment of the present invention, a time period of the semi-engaged state during the engagement or disengagement of the frictional engagement element is increased to perform the engagement or disengagement operation at a lower speed. That is, a transmission-torque variation per time can be reduced to effectively suppress the aforementioned vibrations. In addition, this effect can be obtained by a transient control without changing speed-shift characteristics of the automatic transmission mechanism. This buffering control based on the operation for increasing the time period of the semi-engaged state may be performed independently of the aforementioned buffering control based on the speed shift operation. Thus, these operations may be performed individually or may be performed in a combinatorial manner.

In either one of the first to fifth preferred embodiments of the present invention, the stop/restart control means may be operable to allow the engine speed at a time of interrupting the fuel supply to be set at a given target engine speed, and the buffering control may include an engine-speed lowering control configured to allow the engine speed at a time of the switching from the drive mode to the neutral mode to be lowered to a value less than the target engine speed. Further, the buffering control may be configured to adjust the lowered engine speed at the target engine speed, after the switching.

According to this sixth preferred embodiment of the present invention, the engine speed at a time of the switching from the drive mode to the neutral mode can be set at a relatively low value, and then the engine speed at a time of interrupting the fuel supply (target engine speed) is can be set at a relatively high value.

In this way, the engine speed at a time of the switching from the drive mode to the neutral mode can be lowered to provide a reduced difference with the turbine speed. Thus, as compared with a case where the engine speed has a relatively high value, a fundamental level of the problem (level of the transient vibrations) can be reduced. The aforementioned buffering control may be combined with this engine-speed lowering control to obtain this effect more reliably and more remarkably.

In addition, the target engine speed can be set at a relatively high value to relatively increase a total number of rotations of the engine (crankshaft) in a period from the interruption of the fuel supply through until the engine is completely stopped. This makes it possible to sufficiently scavenge burnt gas. Additionally, a time period before the complete stop of the engine can be relatively extended. This makes it easy to perform the automatic engine stop control for leading a piston stop position at a time of the engine stop within an adequate range.

The engine starting system according to the sixth preferred embodiment of the present invention may include deceleration fuel-cut control means operable, during deceleration of the vehicle under a given condition, to perform a deceleration fuel-cut control configured to cut off a fuel supply to the engine while maintaining engine operation based on the reverse driving force from the driven wheel. In this case, the stop/restart control means may be operable, when making the transition from the deceleration fuel-cut control to the automatic engine stop control, to resume the fuel supply to the engine and then perform the engine-speed lowering control.

According to this seventh preferred embodiment of the present invention, the deceleration fuel-cut control is performed, and then the fuel supply to the engine is resumed in advance of the subsequent automatic engine stop control. Thus, the engine speed can be lowered to an extent capable of sufficiently obtaining the effect of the buffering control, and then the lowered engine speed can be quickly increased up to the target engine speed. This makes it possible to achieve a smooth transition to the automatic engine stop control.

In the engine starting system of the present invention, the automatic engine stop condition may include at least two conditions that an accelerator is in a released state, and a foot brake is in an activated state.

According to this eighth preferred embodiment of the present invention, the buffering control is performed under conditions where the transient vibrations tend to occur, i.e. in response to satisfaction of at least two conditions that an accelerator is in a released state and a foot brake is in an activated state. This makes it possible to effectively suppress the transient vibrations. As used in this specification, the term "brake" means this foot brake.

As above, according to the present invention, the stop/restart control means is operable, in response to satisfaction of the automatic engine stop condition when the automatic transmission mechanism is in the drive mode, to switch the automatic transmission mechanism from the drive mode to the neutral mode in an initial stage of the automatic engine stop control. Further, in conjunction with the switching, the stop/restart control means is operable, in an event where the engine speed detected by the engine speed detection means is greater, by a given value or more, than the turbine speed detected by the turbine speed detection means, to perform the buffering control configured to reduce transient vehicle vibrations to be caused by the switching, and, after the buffering control, to interrupt the fuel supply for maintaining engine operation. Thus, the engine starting system of the present invention makes it possible to switch the automatic transmission mechanism from the drive mode to the neutral mode through the automatic engine stop control so as to achieve enhanced restart performance while reducing transient vehicle vibrations to be caused by the switching.

These and other objects, features and advantages of the invention will become more apparent upon reading the following detailed description along with the accompanying drawings.

### BRIEF DESCRIPTION OF THE DRAWINGS

FIG. 1 is a schematic sectional view of an engine having an engine starting system according to one embodiment of the present invention.
FIG. 2 is an explanatory diagram showing the structure of an intake system and an exhaust system of the engine in FIG. 1.
FIG. 3 is a schematic diagram showing one example of an automatic transmission mechanism associated with an engine starting system according to one embodiment of the present invention.
FIG. 4 is a relation chart showing one example of a relation between engaged/disengaged states of each engagement element and each speed stage in the automatic transmission mechanism in FIG. 3.
FIG. 5 is a block diagram showing an engine starting system according to one embodiment of the present invention.
FIG. 6 is a fragmentary shift map showing a speed shift pattern of the automatic transmission mechanism.
FIG. 7 is a schematic diagram showing an engine-driving-force transmission path and a rotational direction of each member of the automatic transmission mechanism in a first speed stage of a D range or an L range.
FIG. 8 is a schematic diagram showing an engine-driving-force transmission path and a rotational direction of each member of the automatic transmission mechanism in a second speed stage of the D range.
FIG. 9 is a schematic diagram showing an engine-driving-force transmission path and a rotational direction of each member of the automatic transmission mechanism in a third speed stage of the D range.
FIGS. 10A and 10B show a relationship between a compression-stroke cylinder and an expansion-stroke cylinder in the process of automatically stopping the engine, wherein FIG. 10A shows a positional relationship between respective pistons of the compression-stroke cylinder and the expansion-stroke cylinder, and FIG. 10B shows a relationship between a piston stop position and an in-cylinder air volume in each of the compression-stroke and expansion-stroke cylinders.
FIG. 11 is a time chart showing temporal changes in engine speed, turbine speed, vehicle speed, mode of the automatic transmission mechanism and throttle opening in the process of automatically stopping the engine.
FIG. 12 is a time chart showing temporal changes in engine speed, throttle opening, boost pressure and stroke in each cylinder in the process of automatically stopping the engine.
FIG. 13 is a distribution chart showing a correlation between an engine speed during an engine stop operation and a piston stop position.
FIG. 14 is a flowchart showing a process of detecting a piston stop position.
FIGS. 15A and 15B are explanatory waveform charts showing output crank angle signals, wherein FIG. 15A shows a waveform in a state when an engine crankshaft is rotated in a normal rotational direction, and FIG. 15B shows a waveform in a state when the engine crankshaft is rotated in a reverse rotational direction.
FIG. 16 is a schematic flowchart showing an automatic engine stop control.
FIG. 17 is a schematic flowchart showing a buffering control subroutine in the automatic engine stop control illustrated in FIG. 16.
FIG. 18 is a schematic flowchart showing an example of modification of the buffering control subroutine illustrated in FIG. 17.
FIG. 19 is a time chart showing a combustion cycle during an engine restart control.
FIG. 20 is a time chart showing temporal changes in engine speed etc., during in the engine restart control.

### DETAILED DESCRIPTION OF THE PREFERRED EMBODIMENTS OF THE INVENTION

With reference to the drawings, an embodiment of the present invention will now be described.

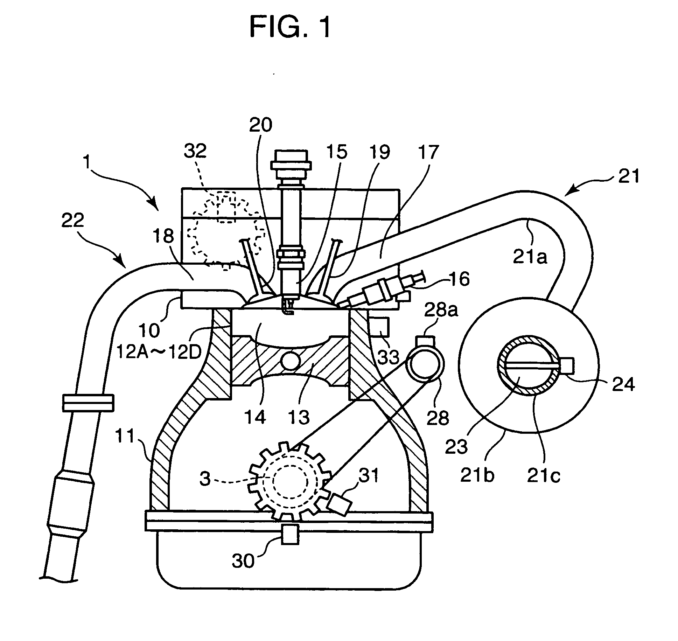

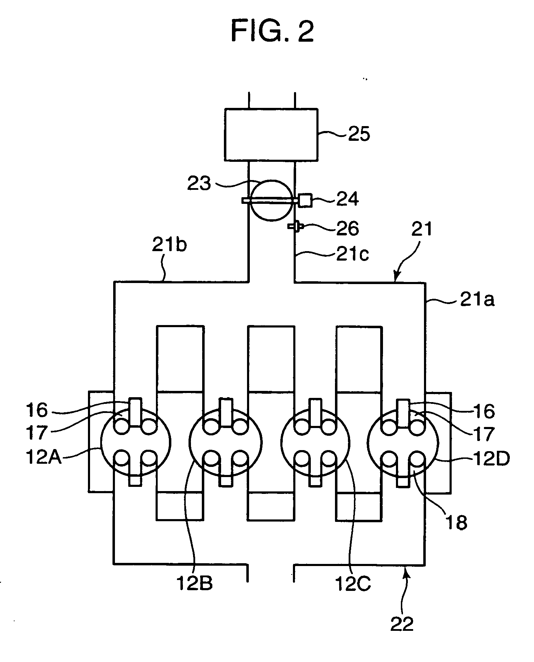

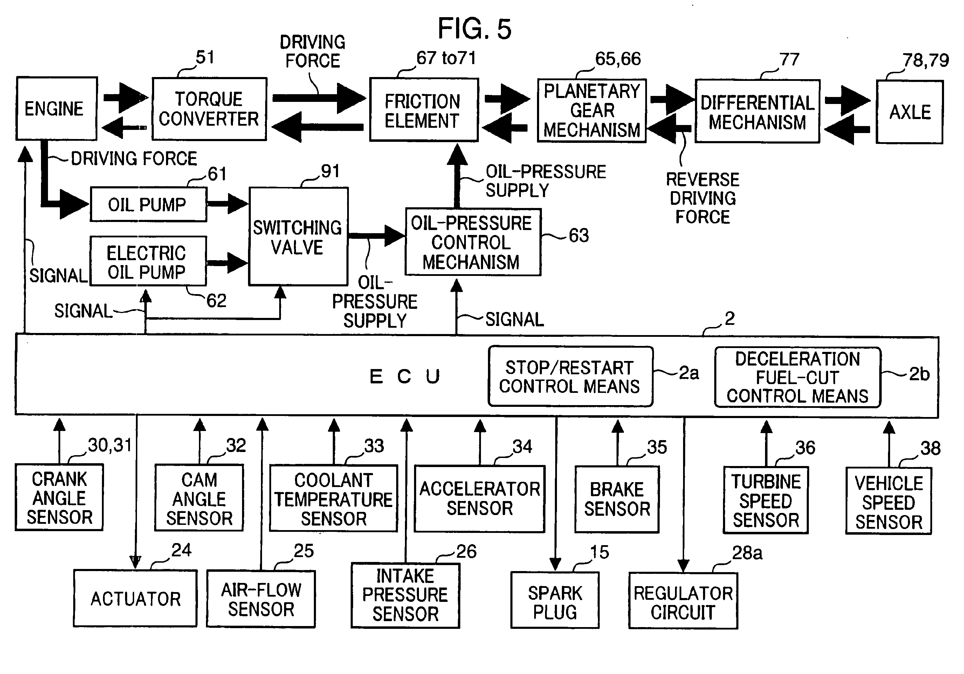

FIGS. 1 and 2 schematically show the structure of a four-stroke spark-ignition engine having an engine starting system according to one embodiment of the present invention. This engine comprises an engine body 1 including a cylinder head 10 and a cylinder block 11, and an engine control ECU 2 (see FIG. 5). The engine body 1 has a plurality of cylinders (four cylinders in this embodiment) 12A to 12D, and a piston 13 connected to a crankshaft 3 through a connecting rod is slidably fitted in each of the cylinders 12A to 12D to define a combustion chamber 14 above the piston 13.

The combustion chamber 14 in each of the cylinders 12A to 12D has a top wall portion provided with a spark plug 15 whose tip is exposed to the combustion chamber 14. The combustion chamber 14 also has a side wall portion provided with a fuel injection valve 16 for injecting a fuel directly into the combustion chamber 14. The fuel injection valve 16 is equipped with a built-in needle value and solenoid (not shown), and designed to be activated and opened for a time-period corresponding to a pulse width of a pulse signal entered therein so as to inject fuel in an amount proportional to the valve open period. The fuel injection valve 16 is also designed to inject the fuel toward a position adjacent to the spark plug 15. The fuel injection valve 16 is associated with a fuel supply system for supplying fuel from a fuel pump (not shown) thereto through a fuel supply passage etc., and the fuel supply system is adapted to supply fuel at a fuel pressure greater than an in-cylinder pressure in a compression stroke.

A pair of intake ports 17 and a pair of exhaust ports 18 are fluidically connected to the combustion chamber 14 in each of the cylinders 12A to 12D. Each of the intake ports 17 is equipped with an intake valve 19, and each of the exhaust ports 18 is equipped with an exhaust valve 20. The intake and exhaust valves 19, 20 are designed to be driven by a valve operating mechanism including a camshaft (not shown). As described in detail later, respective opening/closing timings of the intake and exhaust valves 19, 20 in the cylinders 12A to 12D are set to allow respective combustion cycles in the cylinders 12A to 12D to be performed with given phase differences.

An intake passage 21 and an exhaust passage 22 are fluidically connected, respectively, to the intake ports 17 and the exhaust ports 18. As shown in FIG. 2, a downstream portion of the intake passage 21 adjacent to the intake ports 17 is formed as four independently branched intake manifold passages 21a corresponding to the cylinders 12A to 12D, and respective upstream ends of the intake manifold passages 21 a are fluidically connected to a surge tank 21b. A portion of the intake passage 21 on an upstream side relative to the surge tank 21b is formed as a common intake passage 21 c, and intake flow volume adjusting means composed of a throttle valve 23 designed to be driven by an actuator 24 is disposed in the common intake passage 21c. Further, an air-flow sensor 25 for detecting an intake flow volume and an intake pressure sensor 26 for detecting an intake pressure (boost pressure) are disposed, respectively, on the upstream and downstream sides of the throttle valve 23.

An alternator (power generator) 28 is attached to the engine body 1 and connected to the crankshaft 3 through a timing belt or the like. The alternator 28 comprises a regulation circuit 28a for controlling a current to be applied to a field coil (not shown) thereof so as to adjust an output voltage therefrom. More specifically, the alternator 28 is designed such that an output current therefrom is controlled at a target value corresponding to an electric load of a vehicle, a voltage of an in-vehicle battery, etc., based on a control signal from the ECU 2 during a normal engine operation.

The engine is provided with a pair of first and second crank angle sensors 30, 31 for detecting a rotational angle of the crankshaft 3. An engine speed is detected based on a detection signal generated from the first crank angle sensor 30, and a rotational direction and a rotational angle of the crankshaft 3 are detected based on respective detection signals generated from the first and second crank angle sensors 30, 31 with a phase lag.

The engine is also provided with a cam angle sensor 32 for detecting a specific rotational position of the camshaft to generate a cylinder discrimination signal for discriminating the cylinders from each other, and a coolant temperature sensor 33 for detecting an engine coolant temperature. Further, as shown in FIG. 5, the engine is provided with an accelerator sensor 34 for detecting an accelerator operation angle corresponding to a stroke of an accelerator (accelerator pedal) depressed by a driver, a brake sensor 35 for detecting a brake operation by a driver, and a vehicle speed sensor 38 for detecting a vehicle speed. The detection signals generated from these sensors 32, 33, 34, 35, 38 are entered into the ECU 2.

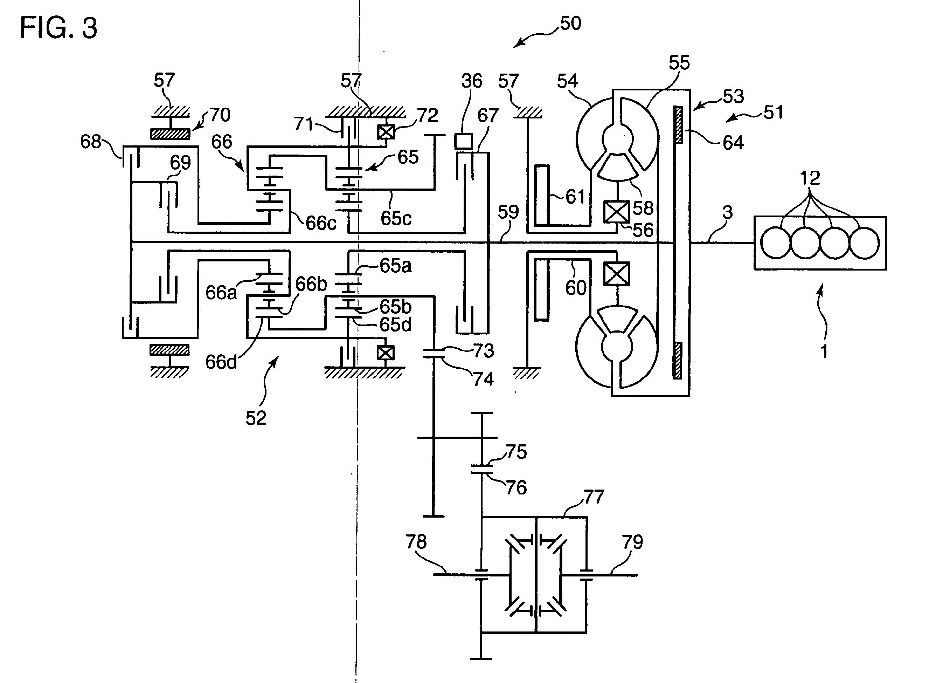

As shown in FIG. 3, the engine is connected to an automatic transmission mechanism 50 through the crankshaft 3 serving as an output shaft thereof. The automatic transmission mechanism 50 comprises a torque converter 51 connected with the crankshaft 3, and a multi-stage speed shift mechanism 52 connected to a turbine shaft 59 serving as an output shaft of the torque converter 51. The speed shift mechanism 52 includes a plurality of friction elements 67 to 71 each designed to be selectively locked or unlocked (engaged or disengaged) so as to allow the automatic transmission mechanism 50 to be switchable between a neutral mode for cutting off or precluding transmission of a driving force from the engine to a road wheel of the vehicle, and a drive mode for permitting transmission of the driving force from the engine to the road wheel.

The torque converter 51 includes a pump cover 53 connected with the crankshaft 3, a pump impeller 54 integrally formed with the pump cover 53, a turbine (turbine runner) 55 disposed in opposed relation to the pump impeller 54, and a stator 58 disposed between the pump impeller 54 and the turbine 55 and attached to a case 57 through an one-way clutch 56. An internal space of the pump cover 53 is filled with oil (working oil) serving as working fluid to allow a driving force of the pump impeller 54 to be transmitted to the turbine 55 through the working oil. Then, the driving force is transmitted between the turbine 55 and the multi-stage speed shift mechanism 52 through the turbine shaft 59 connected with the turbine 55.

A turbine speed sensor 36 for detecting a rotational speed of the turbine 55 is fixed to the case 57 in such a manner as to be located opposed to an outer peripheral surface of a forward clutch 67 adapted to be integrally rotated together with the turbine shaft 59. More specifically, the turbine speed sensor 36 is designed to have a distal end located opposed to an outer peripheral surface of a drum of the forward clutch 67, and detect periodical changes in induced voltage to be generated by rotation of the drum and resulting displacement of a plurality of spline-shaped convex/concave portions formed in the outer periphery of the drum, so as to detect a rotation number or turbine speed of the turbine 55 through a rotation number of the turbine shaft 59.

The pump impeller 54 is connected to a hollow shaft 60, and an oil pump 61 is attached to a rear end of the hollow shaft 60 (one end on the opposite side relative to the engine body 1). In addition to this pump-impeller-driven oil pump or impeller oil pump 61, the torque converter 51 is provided with a motor-driven or electric oil pump 62 (see FIG. 5), and these oil pumps 61, 62 are fluidically connected to an oil-pressure control mechanism 63 (see FIG. 5) through a switching valve 91. According to a switching signal from the ECU 2, the switching 95 performs a switching control between the impeller oil pump 61 and the electric oil pump 62. Further, the ECU 2 is operable to perform a switching operation between a plurality of oil lines (fluid lines) in the oil-pressure control mechanism 63, a setting operation of a line pressure (oil pressure during engagement in each of the friction elements 67 to 71), and a transitional oil-pressure control during engagement/disengagement in each of the friction elements 67 to 71, so as to selectively lock or unlock (engage or disengage) each of the friction elements 67 to 71.

The reason for providing the electric oil pump 62 in addition to the impeller oil pump 61 is to ensure a desired line pressure when the impeller oil pump 61 has difficulty in supplying the desired line pressure by itself due to a relatively low engine speed during engine stop or in an initial stage of engine starting. From this standpoint, the timing of switching between the impeller oil pump 61 and the electric oil pump 62 is determined.

The torque converter 51 also includes a lockup clutch 64 disposed between the pump cover 53 and the turbine 55 and adapted to connect the crankshaft 3 directly to the turbine 55 through the cover 53. This lockup clutch 64 is fluidically connected to the impeller oil pump 62 and the electric oil pump 62 through the oil-pressure control mechanism 63, and designed to be selectively placed in an engaged or disengaged state according to an on-off control of various solenoid valves incorporated in the oil-pressure control mechanism 63.

The multi-stage speed shift mechanism 52 includes first and second planetary gear mechanisms 65, 66, and a plurality of engagement elements (a plurality of friction elements 67 to 71, such as clutch plates and band brakes, and a one-way clutch 72) for switching between a plurality of driving-force transmission paths including the planetary gear mechanisms 65, 66. Each of the engagement elements is designed to be selectively locked or unlocked depending on shift ranges (D range, N range, R range, etc.) so as to switch between a forward drive mode, a neutral mode and a reverse drive mode.

As used in this specification, the terms "drive mode" and "neutral mode" do not necessarily mean shift-lever or gear-lever positions (D and N positions), but mean substantial states of the automatic transmission mechanism 50 defined based on transmission states of a driving force. For example, a state after the automatic transmission mechanism 50 is switched to cut off (or preclude) transmission of a driving force while keeping a shift-lever or gear-lever position in the D position is includes in the neutral mode.

Each of the first and second planetary gear mechanisms 65, 66 comprises a sun gear (65a, 66a), a plurality (e.g. three) of planetary gears (65b, 66b) disposed around the sun gear (65a, 66a), a carrier (65c, 66c) supporting the planetary gears (65b, 66b), and a ring gear (65d, 66d) disposed to surround the planetary gears (65b, 66b) and engaged therewith. The ring gear 65d of the first planetary gear mechanism 65 is connected to the carrier 66c of the second planetary gear mechanism 66, and the carrier 65c of the first planetary gear mechanism 65 is connected to the ring gear 66d of the second planetary gear mechanism 66, so as to allow the planetary gear mechanisms 65, 66 to be interlocked with one another.

The friction elements include a forward clutch 67 interposed between the turbine shaft 59 and the sun gear 65a of the first planetary gear mechanism 65, a reverse clutch 68 interposed between the turbine shaft 59 and the sun gear 66a of the second planetary gear mechanism 66, a 3-4 clutch 69 interposed between the turbine shaft 59 and the carrier 66c of the second planetary gear mechanism 66, a 2-4 brake 70 for immobilizing the sun gear 66a of the second planetary gear mechanism 66, and a low/reverse brake 71 for immobilizing the ring gear 65d of the first planetary gear mechanism 65 and the carrier 66c of the secondary planetary gear mechanism 66. The one-way clutch 72 is designed to be unlocked in such a manner as to allow each of the ring gear 65d and the carrier 66c to be rotated in one direction (in a driving direction of the crankshaft 3) and to be locked in such a manner as to prevent each of the ring gear 65d and the carrier 66c from being rotated in the opposite direction. These engagement elements 67 to 72 are locked or unlocked selectively and combinationally to change or disconnect a driving-force transmission path to be connected to an output gear 73.

Then, when the output gear 73 is rotated, a driving force will be transmitted toward the road wheels, or to right/left axles 78, 79 through driving gears 74, 75, 76 and a differential mechanism 77. The right/left axles 78, 79 are designed to be integrally rotated together with corresponding road wheels (driven wheels: not shown).

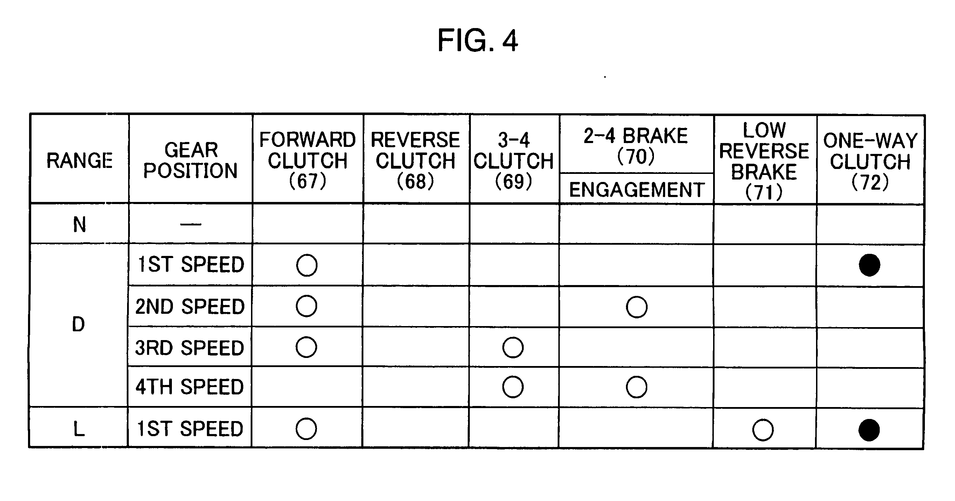

FIG. 4 shows a relationship between a locked/unlocked state in each of the engagement elements 67 to 72 and a speed stage (gear position). In FIG. 4, the mark O indicates that each of the engagement elements 67 to 72 is in an engaged or locked state, and the mark • indicates that the one-way clutch 72 is locked during an engine drive (when a driving force from the engine is directed toward the driven wheels) to permit transmission of the driving force, and locked during a reverse drive (when a reverse driving force from the driven wheels is directed toward the engine) to preclude transmission of the reverse driving force. Further, the blank indicated that each of the engagement elements 67 to 72 is in a disengaged or unlocked state. Specifically, in the N range, all of the engagement elements 67 to 72 are in the disengaged or unlocked state. Further, in a 1 st-speed stage of the D range, the forward clutch 67 is in the engaged state, and the one-way clutch 72 is in the locked state during the engine drive and in the unlock state during the reverse drive. In a 2nd-speed stage, each of the forward clutch 67 and the 2-4 brake 70 is in the engaged state. In a 3rd-speed stage, each of the forward clutch 67 and the 3-4 clutch 69 is in the engaged state. In a 4th-speed stage, each of the 3-4 clutch 69 and the 2-4 brake 70 is in the engaged state. In a 1 st-speed stage of the L range, each of the forward clutch 67 and the low/reverse brake 71 is in the engaged state, and the one-way clutch 72 is in the locked state during the engine drive and in the unlock state during the reverse drive.

In FIG. 4, all shift ranges and gear positions (speed stages) are not covered but a part of the shift ranges and gear positions having no direct relation with this embodiment are omitted.

FIG. 5 shows a block diagram showing the engine starting system according to this embodiment. The ECU 2 comprises a computer including a CPU, a ROM and a RAM. Specifically, the CPU is configured to execute a program pre-stored on the ROM (or RAM) so as to control various operations of the vehicle. In response to receiving signals from the sensors 25, 26, 30 to 36, 38, the ECU 2 is operable to send a fuel-injection-amount control signal and a fuel-injection-timing control signal to each of the fuel injection valves 16, and send an ignition timing control signal to each of the spark plugs 15. The ECU 2 is also operable to send a throttle opening control signal and an output current control signal, respectively, to the actuator 24 of the throttle valve 23 and the regulator circuit 28a of the alternator 28.

Further, in response to receiving signals from the sensors 25, 26, 30 to 36, 39, the ECU 2 is operable to send to the switching valve 91 a signal for switching initial-pressure supply sources of the oil-pressure control mechanism 63 between the impeller oil pump 61 and the electric oil pump 62, and send a signal for regulating a working pressure in each of the friction elements 67 to 71 to the oil-pressure control mechanism 63 (specifically, the solenoid valves etc., included therein).

The ECU 2 also includes stop/restart control means 2a which is operable, when a given automatic engine stop condition is satisfied, to interrupt fuel supply so as to automatically stop the engine, and, when a given engine restart condition is satisfied as the result of a passenger's operation of the accelerator, the brake, etc., during the automatic engine stop operation or after automatic stop of the engine, to automatically restart the engine based on combustion energy of the engine.

The ECU 2 further includes deceleration fuel-cut control means 2b which is operable, when the throttle opening is in a fully-closed state or close to the fully-closed state during deceleration of the vehicle and the automatic transmission mechanism 50 is in the mode permitting transmission of the reverse driving force, to interrupt fuel supply. This interruption of fuel supply is not intended to stop the engine (crankshaft 3) but to achieve enhanced fuel efficiency and reduced CO₂ emissions while allowing the crankshaft 3 to be continuously rotated based on the reverse driving force from the driven wheels even after the interruption of fuel supply. Therefore, the deceleration fuel-cut control means 2b is designed to resume the fuel supply when the engine speed is lowered to a given value (e.g. 1200 rpm), so as to avoid stopping the engine.

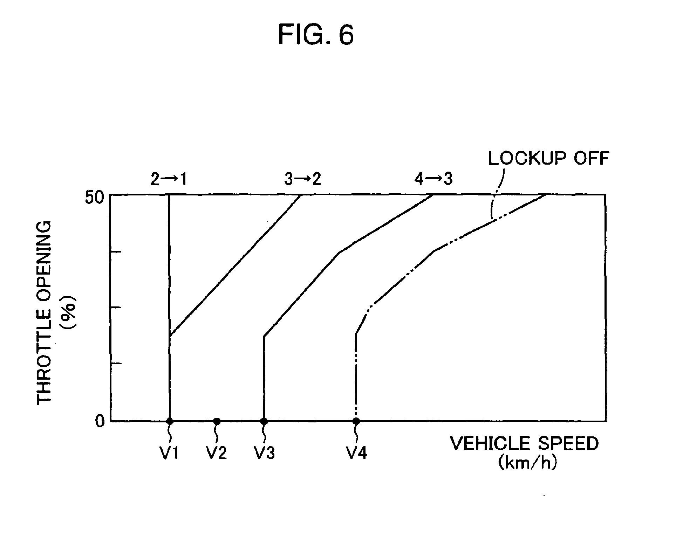

FIG. 6 is a fragmentary shift map showing a speed shift pattern of the automatic transmission mechanism 50, wherein the horizontal axis represents the vehicle speed (km/h), and the vertical axis represents the throttle opening (opening angle of the throttle valve 23) (%). For simplifying the figure, FIG. 6 shows only a lockup OFF line in a low throttle-opening range (throttle opening: 50% or less) and downshift lines (2→1 shift line, 3→2 shift line, 4→3 shift line). The ECU 2 is operable, based on this shift map, to select an optimal speed stage for a current vehicle speed and throttle opening on as needed and send a signal to (the solenoid valves) of the oil-pressure control mechanism 63 so as to controllably shift the automatic transmission mechanism 50 to the optimal speed stage.

As shown in FIG. 6, the 2→1 shift line and the 3→2 shift line overlap with one another in a low throttle-opening range. This means that the 3rd speed stage is shifted directly to the 1st speed stage in the low throttle-opening range. This prevents occurrence of frequent speed shifts 3→2→1 during deceleration of the vehicle in the low throttle-opening range to provide enhanced running feeling.

An operation of the engine starting system according to this embodiment will be described below. Firstly, an operation of the automatic transmission mechanism 50 will be described.

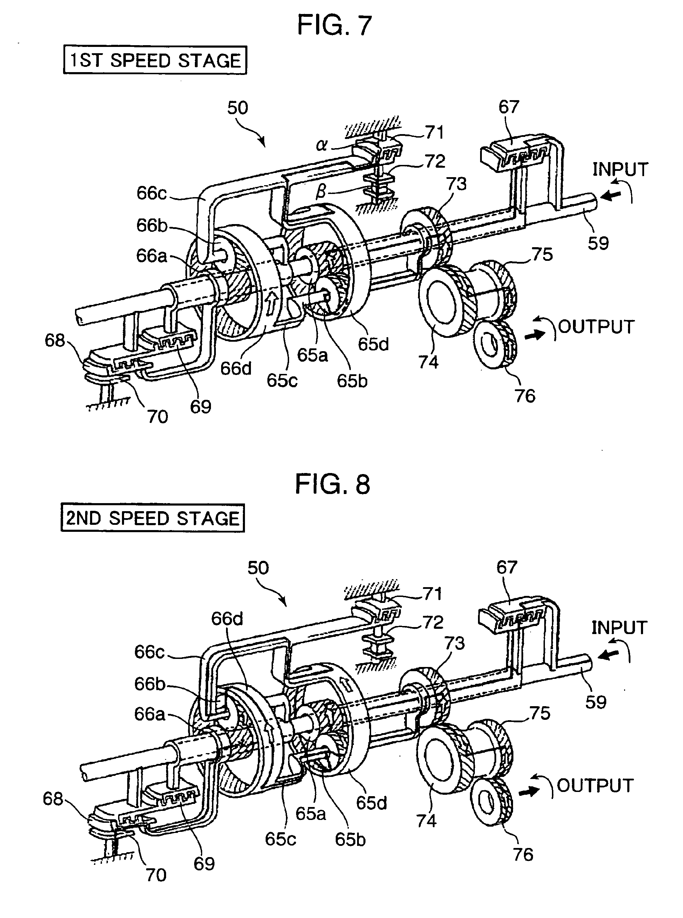

FIG. 7 is a schematic diagram showing an engine-driving-force transmission path and a rotational direction of each member of the automatic transmission mechanism 50 in the 1st speed stage of the D range or L range. In FIG. 7, a leftward rotation and a rightward rotation viewed from the left and front side of this figure are defined, respectively, as a normal rotational direction and a reverse rotational direction. When the engine is in a normal operation state, the turbine shaft 59 is rotated in the normal rotational direction. Further, when the vehicle is in a forward running state, the driving gear 76 is rotated together with the axles 78, 79 in the normal rotational direction.

In the 1st speed stage illustrated in FIG. 7, the turbine shaft 58 is rotated in the normal rotational direction, and this rotational driving force of the turbine shaft 58 is transmitted to the sun gear 65a through the forward clutch 67. Then, the driving force is transmitted to the planetary gear 65b, and the planetary gear 65b is rotated in the reverse rotational direction. When the one-way clutch 72 is locked (indicated by the path β) in the D range or the L range, and the low/reverse brake 71 is further engaged in the L range (indicated by the path α), a rotation of the ring gear 65d in the reverse rotational direction is restricted. Thus, the planetary gear 65b is rotated about its support shaft (carrier 65c) in the reverse rotational direction, and integrally rotated together with the carrier 65c around the sun gear 65a in the normal rotational direction. That is, the carrier 65c is rotated in the normal rotational direction. This rotational driving force of the carrier 65c in the normal rotational direction is transmitted to the output gear 73 and the driving gears 74, 75, 76. Subsequently, the rotational driving force will be transmitted to the axles 78, 79 through the differential mechanism 77, as shown in FIG. 3.

The carrier 65c is connected to the ring gear 66d, and thereby the ring gear 66d is rotated in the normal rotational direction. Further, the carrier 66c is connected to the ring gear 65d which is stopped due to the one-way clutch 72 in the locked state or the low/reverse brake 71 in the engaged state. Thus, the carrier 66c is stopped, and thereby the planetary gear 66b is rotated in the normal rotational direction. Then, the sun gear 66a engaged with the planetary gear 66b is rotated in the reverse rotational direction.

In the 1st speed stage of the L range, a reverse-driving-force transmission path is structurally the same as but directionally opposite to the engine-driving-force transmission path illustrated in FIG. 7 (the driving gear 76 serves as an input end, and the turbine shaft 59 serves as an output end). Each of the members is rotated in the same direction as described above. This reverse-driving-force transmission path can be achieved only if the rotation of the ring gear 65d in the normal rotational direction (in a direction opposite to that during the engine drive) is restricted. The low/reverse brake 71 is engaged in the 1st speed stage of the L range, and the rotation of the ring gear 65d is restricted in both the normal and reverse rotational directions (path α). Thus, the reverse-driving-force transmission path can be achieved. For example, as characteristics of permitting transmission of the reverse driving force, an engine braking action becomes more effective, and the rotational speed of the turbine shaft 59 (turbine speed) becomes greater than the engine speed depending on a relationship between the vehicle speed and a gear ratio.

In the 1st speed stage of the D range, the reverse-driving-force transmission path is not achieved. Because, due to the low/reverse brake 71 in the disengaged state, the rotation of the ring gear 65d in the normal rotational direction (in a direction opposite to that during the engine drive) is not restricted (the path α is not achieved), and the rotation of the one-way clutch 72 is restricted in the reverse rotational direction but not in the normal rotational direction (the path β is not achieved). For example, as characteristics of precluding transmission of the reverse driving force, an engine braking action becomes substantially ineffective, and the turbine speed is constantly less than the engine speed or approximately equal to the engine speed at most.

FIG. 8 is a schematic diagram showing an engine-driving-force transmission path and a rotational direction of each member of the automatic transmission mechanism 50 in the 2nd speed stage of the D range. The definition of the rotational directions conforms to that of FIG. 7.

As shown in FIG. 4, the 2nd speed stage of the D range is achieved by additionally engaging the 2-4 brake 70 from the state of the 1st speed stage of the D range where the forward clutch 67 is engaged. As described above, in the 1 st speed stage of the D range, the sun gear 66a is rotated in the reverse rotational direction. When the 2-4 brake 70 is engaged from this state, the sun gear 66a is stopped. Thus, the planetary gear 66b is rotated about its support shaft (carrier 66c) in the normal rotational direction, and integrally rotated together with the carrier 66c around the sun gear 66a in the normal rotational direction. That is, the carrier 66c, which is stopped while being restricted in the reverse rotational direction in the 1 st speed stage of the D range, is rotated in the normal rotational direction.

Then, as in the 1st speed stage, the planetary gear 65b is rotated about the carrier 65c in the reverse rotational direction, and integrally rotated around the sun gear 65a in the normal rotational direction. In this process, the ring gear 65d is rotated in the normal rotational direction differently from the state in the 1st speed stage. Thus, the rotational speed of the carrier 65c becomes greater than that in the 1st speed stage, but has a value less than the rotational speed of the turbine shaft 59. Subsequently, the rotational driving force of the carrier 65c in the normal rotational direction will be transmitted to the output gear 73 and the driving gears 74, 75, 76, in the same manner as that in the 1st speed stage.

A reverse-driving-force transmission path is structurally the same as but directionally opposite to the engine-driving-force transmission path illustrated in FIG. 8 (the driving gear 76 serves as an input end, and the turbine shaft 59 serves as an output end). Each of the members is rotated in the same direction as described above. This reverse-driving-force transmission path can be achieved only if the rotation of the sun gear 66a in the normal rotational direction (in a direction opposite to that during the engine drive) is restricted. Due to The 2-4 brake 70 in the engaged state, the rotation of the sun gear 66a is restricted in both the normal and reverse rotational directions, and thereby the reverse-driving-force transmission path is achieved.

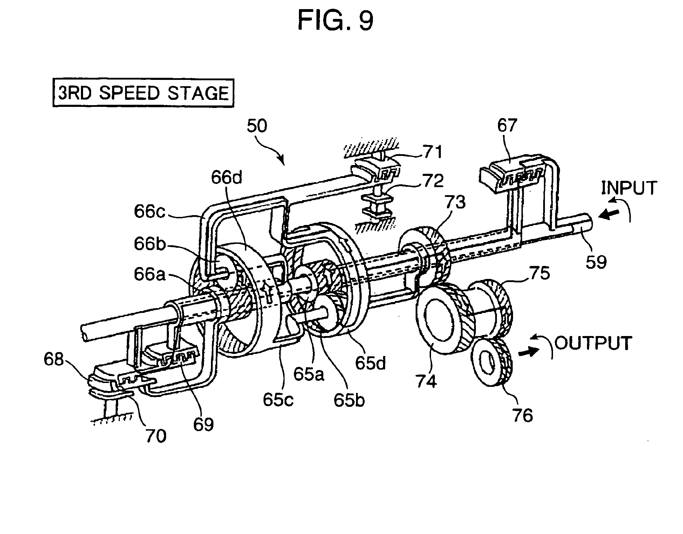

FIG. 9 is a schematic diagram showing an engine-driving-force transmission path and a rotational direction of each member of the automatic transmission mechanism 50 in the 3rd speed stage of the D range. The definition of the rotational directions conforms to that of FIG. 7.

As shown in FIG. 4, the 3rd speed stage of the D range is achieved by engaging the forward clutch 67 and the 3-4 clutch 69.

In the 3rd speed stage illustrated in FIG. 9, the turbine shaft 59 is rotated in the normal direction, and the rotational driving force of the turbine shaft 59 is divided into a first path going through the forward clutch 67 and a second path going through the 3-4 clutch 69. In the first path, the driving force is transmitted to the sun gear 65a through the forward clutch 67. Then, the driving force is transmitted to the ring gear 65d through the planetary gear 65b. That is, each of the sun gear 65a, the carrier 65c and the ring gear 65d is integrally rotated together with the turbine shaft 59 at the same speed. In the second path, the driving force is transmitted to the carrier 66c through the 3-4 clutch 69 at a constant speed.

That is, the respective driving forces divided into the first and second paths are combined at the ring gear 65d, and then the combined driving force is output from the carrier 65c to the output gear 73. Finally, the same driving force as that input from the turbine shaft 59 is output to the output gear 73 at the same rotational speed as that of the turbine shaft 59 (direct drive state). Then, the driving force is transmitted to the driving gears 74, 75, 76, and subsequently transmitted to the axles 78, 79 through the differential mechanism 77, as shown in FIG. 3.

A reverse-driving-force transmission path is structurally the same as but directionally opposite to the engine-driving-force transmission path illustrated in FIG. 9 (the driving gear 76 serves as an input end, and the turbine shaft 59 serves as an output end). Each of the members is rotated in the same direction as described above.

In the 3rd speed stage, the sun gear 65a, the carrier 65c, the ring gear 65d and the carrier 66c are rotated integrally together or in the direct drive state, and thereby the reverse-driving-force transmission path is achieved.

While an operation of each member of the automatic transmission mechanism 50 in the 4th speed stage of the D range will be omitted, the 3-4 clutch 69 and the 2-4 brake 70 are engaged as shown in FIG. 4, and the driving force input from the turbine shaft 59 is transmitted to the carrier 65c at a rotational speed grater than that of the turbine shaft 59. Subsequently, the driving force will be transmitted to the driving gears 74, 75, 76 and then to the axles 78, 79 through the differential mechanism 77, in the same manner as that described above.

Further, due to the 2-4 brake 70 in the engaged state, the rotation of the sun gear 66a is restricted in both the normal and reverse rotational directions to permit transmission of the reverse driving force. That is, the reverse-driving-force transmission path is achieved.

As mentioned above, the automatic transmission mechanism 50 is designed to be shifted stepwise from the 1st speed stage to a higher speed stage or to the 2nd speed stage, the 3rd speed stage and the 4th speed stage. Further, the reverse driving force is not transmitted in the 1 st speed stage of the D range, but transmitted in the 1 st speed stage of the L range, and the 2nd, 3rd and 4th speed stage of the D range.

The operations for automatically stopping and restarting the engine based on the stop/restart control means 2a will be described below.

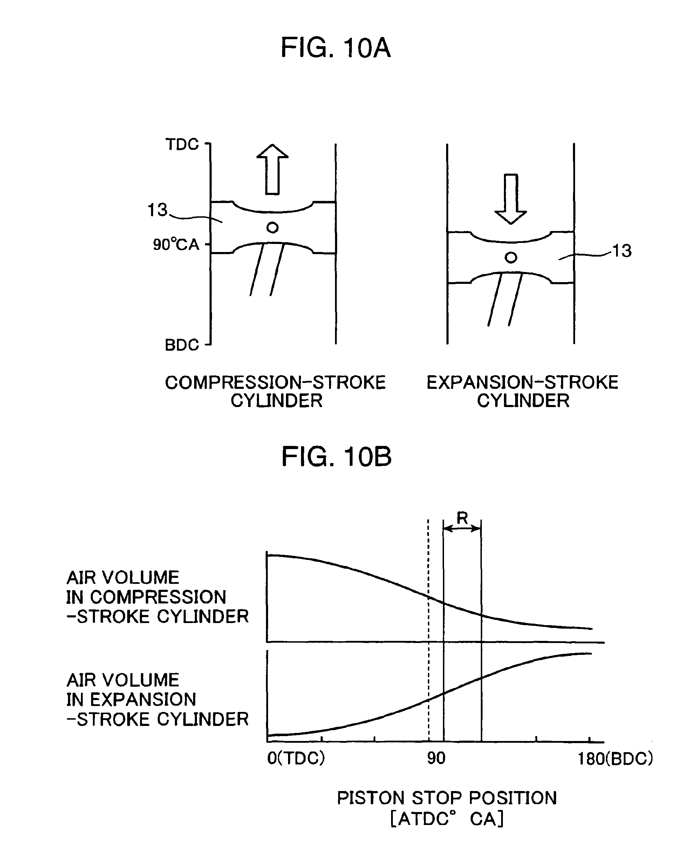

FIGS. 10A and 10B show a relationship between a compression-stroke cylinder and an expansion-stroke cylinder in the process of automatically stopping the engine. The term "compression-stroke cylinder" does not mean a specific cylinder but either one of the cylinders 12A to 12D which is or will be in a compression stroke just after stop of the engine. Similarly, the term "compression-stroke cylinder" means either one of the cylinders 12A to 12D which is or will be in a compression stroke just after stop of the engine. FIG. 10A shows a positional relationship between respective pistons 13 of the compression-stroke cylinder and the expansion-stroke cylinder, and FIG . 10B shows a stop position of each of the pistons 13 and an air volume in each of the cylinders.

As shown in FIG. 10A, respective positions and moving directions of the pistons 13 of the compression-stroke and expansion-stroke cylinders are opposite in phase because these cylinders are out of phase by 180°CA. Specifically, as indicated by the outline arrows, when the piston 13 of the compression-stroke cylinder is moved toward a TDC (Top Dead Center), the piston 13 of the expansion-stroke cylinder is moved toward a BDC (Bottom Dead Center).

These movements are utilized in this embodiment. Specifically, in an operation for restarting the engine after being automatically stopped, combustion is produced in the compression-stroke cylinder in advance of combustion in the expansion-stroke cylinder, so as to move the piston 13 of the compression-stroke cylinder downward in a reverse direction without going beyond a BDC (the crankshaft is temporarily rotated in a reverse direction). In conjunction with this movement, the piston 13 of the expansion-stroke cylinder is moved in a reverse direction or toward a TDC. Thus, an air (to be formed as an air-fuel mixture after fuel injection) in the expansion-stroke cylinder is compressed. Then, the compressed air-fuel mixture is ignited to produce combustion so as to allow the piston 13 of the expansion-stroke cylinder to be inversely moved downward or toward the BDC by a strong force. That is, the rotational direction of the crankshaft 3 is changed from the reverse direction to a normal directional. In this way, the engine is rotated in the reverse rotational direction, and then combustion is produced in the expansion-stroke cylinder. As compared with a technique of simply producing combustion in the expansion-stroke cylinder, the above technique makes it possible to obtain a stronger driving torque in the normal direction so as to provide enhanced engine restart performance.

While this engine starting system is designed to adequately restart the engine only by igniting a fuel injected into a specific cylinder without using a re-starter motor or the like, combustion energy obtained through the combustion of the air-fuel mixture in the expansion-stroke cylinder is not entirely output from the crankshaft 3, but a part of the combustion energy is consumed to allow another cylinder having a compression TDC subsequently to the expansion-stroke cylinder (expansion-stroke cylinder and intake-stroke cylinder in this embodiment) to be moved beyond the compression TDC against a compressive reactive force. Thus, a driving energy sufficient to move the crankshaft 3 in the normal directional has to be left after the consumed energy is subtracted from the entire combustion energy. For this purpose, it is required to ensure a sufficient volume of air in the expansion-stroke cylinder in an initial state (engine stop state). Further, the compression-stroke cylinder is required to reliably have an air volume sufficient to initially move the crankshaft 3 in the reverse direction so as to compress an air in the expansion-stroke cylinder.

In FIG. 10B, the horizontal axis represents a piston stop position (ATDC° CA: crank angle after TDC), and the vertical axis represents respective in-cylinder air volumes of the expansion-stroke cylinder and the compression-stroke cylinder. The in-cylinder air volume is a measured value in a state when a certain time period has elapsed after stop of the engine in each of the cylinders, and an in-cylinder pressure becomes approximately equal to atmospheric pressure. As described above, the piston 13 of the expansion-stroke cylinder and the piston 13 of the compression-stroke cylinder have opposite phases. Thus, when an air volume in one of the cylinders is increased (the piston 13 is moved toward the BDC), an air volume in the other cylinder is reduced (the piston 13 is moved toward the TDC).

Thus, in order to obtain larger combustion energy in the expansion-stroke cylinder while ensuring a certain level of combustion energy in the compression-stroke cylinder, it is desirable to stop the piston 13 of the expansion-stroke cylinder at a position slightly closer to the BDC relative to a stroke midpoint, for example, within the range of 100 to 120 ATDC° CA (range as shown in FIG. 10B. This range will hereinafter be referred to as "adequate range R".

While there are various specific control techniques for stopping the piston 13 of the expansion-stroke cylinder within the adequate range R, the stop/restart control means 2a in this embodiment is designed to perform a control of adjusting an opening of the throttle valve 23 so as to increase or reduce an intake air volume.

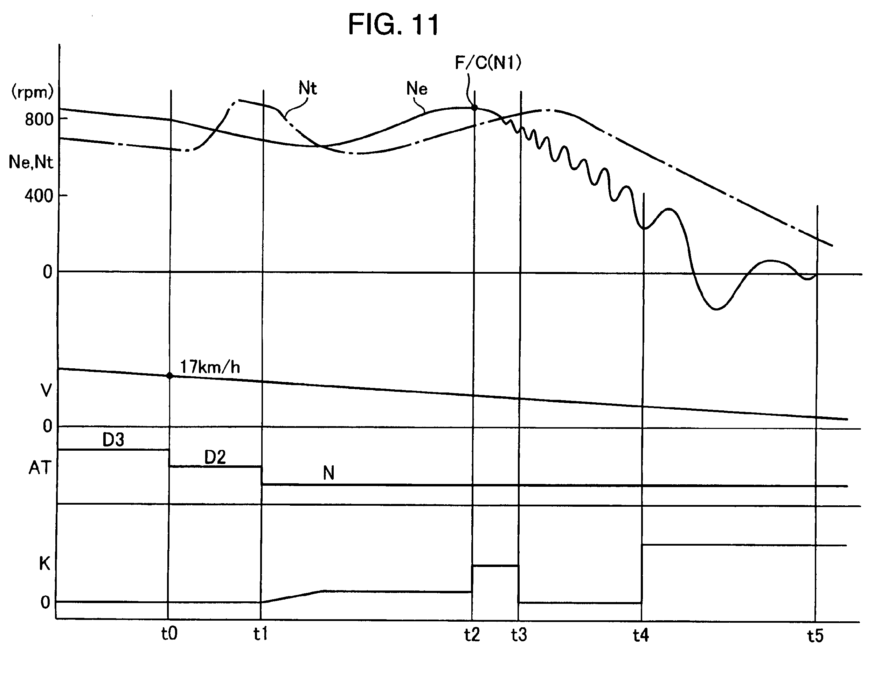

FIG. 11 is a time chart in an operation for automatically stopping the engine, wherein the horizontal axis represents a time t (s), and the vertical axis represents an engine speed Ne (rpm), a turbine speed Nt (rpm), a vehicle speed V (km/h), a mode At of the automatic transmission mechanism 50 and an throttle opening K (%).

With reference to FIG. 11, an outline of an automatic stop control according to the stop/restart control means 2a will be described below. A primary purpose of the automatic stop control is to interrupt fuel supply (F/C) at Time t2 after Time t0 when the automatic engine stop condition is satisfied, so as to lead a piston stop position in the expansion-stroke cylinder at Time t5 when the engine is completely stopped, within the adequate range R.

In order to achieve a higher probability of stopping the piston of the expansion-stroke cylinder within the adequate range R, the stop/restart control means 2a is operable to switch the automatic transmission mechanism 50 from a drive mode D (D2 in FIG. 11) to a neutral mode N. Further, the stop/restart control means 2a is operable to perform a buffering control for preventing a passenger from having uncomfortable feeling due to vibrations occurring during this D →N switching. Specifically, the stop/restart control means 2a is operable, at Time t0 of satisfaction of the automatic engine stop condition in advance of Time t1 of the D →N switching, to shift the automatic transmission mechanism 50 from D3 (3rd speed stage of the D range) to D2 (2nd speed stage of the D range).

With reference to FIG. 11, this automatic stop control will be described in more detail. At Time t0, the automatic engine stop condition is satisfied. In this embodiment, for example, the automatic engine stop condition includes a plurality of conditions that the accelerator is in an OFF state; the brake is in an ON state; the vehicle speed is equal to or less than 17 km/h; a steering angle of a steering wheel is equal to or less than a given value; and a battery voltage is equal to or less than a given value. In FIG. 11, these conditions except for the condition about the vehicle speed have been satisfied before Time t0, and all of the automatic engine stop conditions are satisfied at Time t0 in connection with lowering of the vehicle speed.

At Time t0, the speed stage of the automatic transmission mechanism 50 is in D3. That is, in the shift map illustrated in FIG. 6, the vehicle speed is at the point V2. Thus, if the automatic engine stop condition is not satisfied at Time t0, the vehicle speed is continuously reduced, and the speed stage is shifted from D3 to D1 at the point V1 (e.g. set at 7 to 12 km/h). Differently from this situation, in response to satisfaction of the automatic engine stop condition at Time t0, the stop/restart control means 2a initiates the automatic stop control, and makes preparations before reaching Time t2 when the fuel supply is interrupted. The D3 → D2 speed shift which is not set in the normal shift map illustrated in FIG. 6 is one of the preparations.

The D3 → D2 speed shift serves as a buffering control for suppressing transient vehicle vibrations to be caused by the D → N switching to be subsequently performed at Time t1. This buffering control will be described in detail below.

At Time t0 of satisfaction of the automatic engine stop condition, the engine speed Ne is greater than the turbine speed Nt. That is, a driving force from the engine is transmitted to the drive wheels through the automatic transmission mechanism 50. If the D → N switching is performed without the buffering control immediately after Time t0 of satisfaction of the automatic engine stop condition, the driving force in the drive mode is cut off due to the switching to the neutral mode, and a relatively large negative acceleration (transient deceleration) occurs to cause vibrations. Although the level of the vibrations is not so high, the vibrations occurring unexpectedly without any manual operation are likely to bring uncomfortable feeling to a driver and spoil smoothness in running and luxuriousness.

In this embodiment, when the D3 → D2 speed shift of the automatic transmission mechanism 50 is performed as the buffering control in advance of the D → N switching, the turbine speed Nt is increased by a value corresponding to a difference between respective gear ratios (speed ratios) of D3 and D2. Then, at Time t1 when the turbine speed Nt becomes greater than the engine speed Ne, the transmission of the divining force from the engine to the driven wheels has already been precluded. Thus, even of the D → N switching is performed at Time t1, vibrations to be caused by cutoff of transmission of the driving force from the engine to the driven wheels can be avoided.

The buffering control is not limited to the D3 → D2 speed shift, but may be a D3 → D1 speed shift according to need. The 1st speed stage of the L range including a reverse-driving-force transmission mechanism (path) as described above also has a function of increasing the turbine speed Nt. In addition, the 1 st speed stage is a lower speed stage than the 2nd speed stage. Thus, the D3 → D1 speed shift can more increase the turbine speed Nt. In this embodiment, the D3 → D2 speed shift is selected when a sufficient buffering effect cam be obtained by an increment of the turbine speed based on the D3 → D2 speed shift because of a relatively small difference between the engine speed Ne and the turbine speed Nt at Time t0 of satisfaction of the automatic engine stop condition, and the D3 → D1 speed shift is selected when a large increment of the turbine speed is required due to a relatively large difference between the engine speed Ne and the turbine speed Nt at Time t0.

Further, in this embodiment, when the turbine speed Nt has already be greater than the engine speed Ne in the 3rd speed stage of the D range at Time t0 of satisfaction of the automatic engine stop condition, or when the turbine speed Nt is less than the engine speed Ne a difference between the turbine speed Nt and the engine speed Ne is less than a given value (appropriately determined depending on characteristics of a power train between the engine to the driven wheels) and within an allowable level in terms of the above vibrations, even through the turbine speed Nt is less than the engine speed Ne, the buffering control is omitted.

In order to effectively perform the above buffering control, the stop/restart control means 2a is deigned to perform a speed lowering control from Time t0 of satisfaction of the automatic engine stop condition, to the Time t1 of the D → N switching. The speed lowering control will be described in more detail below.

In this embodiment, in order to further reliably stop the piston 13 of the expansion-stroke cylinder within the adequate range R, the engine speed Ne at Time t2 of the fuel supply interruption is set as a target engine speed N1. Specifically, the fuel supply is interrupted at Time t2 when the engine speed Ne becomes equal to the target engine speed N1. The target engine speed N1 is set at a value, e.g. 860 rpm, greater than a usual idling speed (e.g. 650 rpm). The fuel supply interruption performed at such a relatively high target engine speed makes it possible to relatively increase a total number of rotations of the crankshaft 3 before Time t5 of the complete engine stop, so as to sufficiently scavenge burnt gas. Additionally, a time period before Time t5 of the complete engine can be relatively extended. This makes it easy to perform the automatic engine stop control for leading a piston stop position at a time of the engine stop within an adequate range.

At Time t0 when the automatic engine stop condition is satisfied, the accelerator is in the OFF state and the throttle opening K is zero % as described above, and thereby the engine speed Ne is gradually lowered to an idling speed. Thus, when the engine speed Ne is greater than the target engine speed N1, the engine speed Ne is adjusted at the target engine speed N1 while prevent the engine speed Ne from becoming less than the target engine speed N1. When the engine speed Ne is less than the target engine speed N1, the throttle opening K may be immediately increased to increase the engine speed Ne up to the target engine speed N1 so as to reach Time t2 of the fuel supply interruption within the shortest time.

The stop/restart control means 2a in this embodiment is designed to perform the engine speed lowering control for continuously lowering the engine speed Ne until Time t1 of the D → N switching without immediately performing a control for increasing the engine speed Ne even if the engine speed Ne is less than the target engine speed N1 at or after Time t0 of satisfaction of the automatic engine stop condition.

This engine speed lowering control makes it possible to lower the engine speed Ne at Time t1 of the D → N switching. That is, the engine speed lowering control makes it possible to provide a higher possibility that the turbine speed Nt becomes greater than the engine speed Ne, and reduce a difference between the turbine speed Nt and the engine speed Ne even if the turbine speed Nt is less than the engine speed Ne. Thus, the effect of the buffering control can be obtained more reliably and remarkably.

After Time t1 when the D → N switching combined with the above buffing control, the automatic transmission mechanism 50 is set in the neutral mode. Further, the engine speed lowering control is released, and the throttle opening K is increased, for example, up to about 15%. Thus, the engine speed Ne starts increasing toward the target engine speed N 1. Then, at Time t2 when the engine speed Ne is adjusted and stabilized at the target engine speed N1, the fuel supply is interrupted.

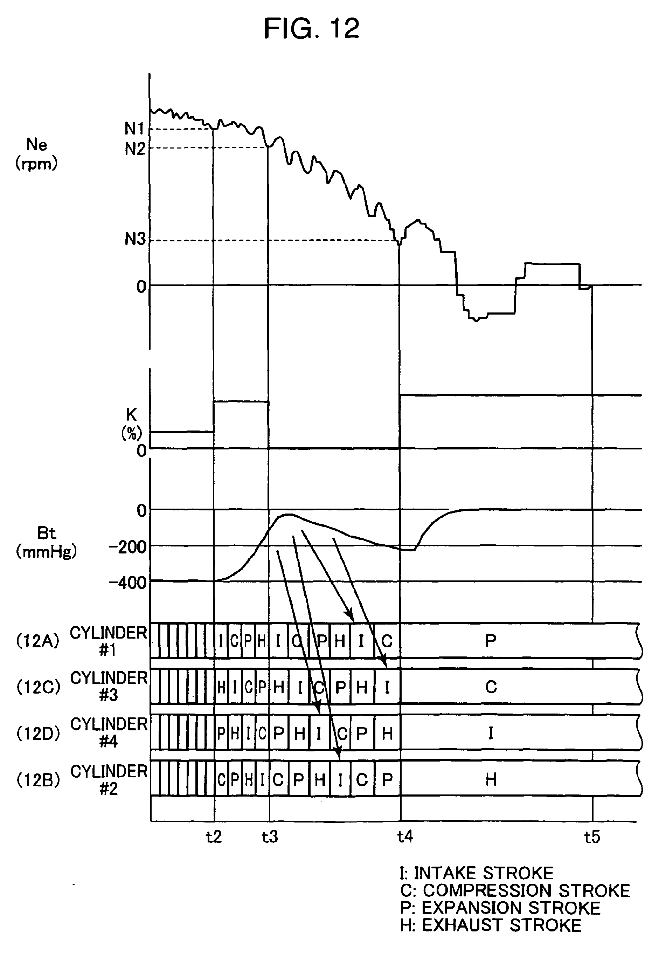

FIG. 12 is an detailed time chart showing an operation after Time t2 in FIG. 11 from another aspect, wherein the horizontal axis represents a time t (s), and the vertical axis represents an engine speed Ne (rpm), a turbine speed Nt (rpm), an throttle opening K (%), a boost pressure (intake pressure) Bt (mm Hg) and strokes in each of the cylinders 12A to 12D. In FIG. 12, the cylinder in the compression stroke at the time (Time t5) of the complete engine stop is the cylinder 12A. The following description will be made on the assumption that the cylinder 12A is a compression-stroke engine 12A. Similarly, the remaining cylinders will be referred to respectively as a compression-stroke cylinder 12C, an intake-stroke cylinder 12D and an exhaust-stroke cylinder 12B.

As shown in FIG. 12, when the fuel supply or injection is interrupted at Time t2, kinetic energy of the crankshaft 3 and other engine components is consumed by mechanical loss due to frictional resistance and pumping loss in the cylinders 12A to 12D, and the crankshaft 3 of the engine is rotated several times by an inertia force. For example, a 4-cylinder 4-stroke engine is stopped after having a compression TDC about 10 times.

Each stop position of the pistons 13 is substantially determined by the balance between respective air volumes in the expansion-stroke cylinder 12A and the compression-stroke cylinder 12C just before complete stop of the engine. Further, the piston stop positions are affected by a frictional resistance of the engine and other factor, and varied depending on a rotational inertia force of the engine or the level of an engine speed N3 at Time t4 when the piston is moved beyond the last compression TDC.

Thus, in order to stop the piston 13 of the expansion-stroke cylinder 12A within the adequate range R, it is required to adjust respective intake air volumes for the expansion-stroke and compression-stroke cylinders 12A, 12C in such a manner as to allow an air volume in the expansion-stroke cylinder 12A to become greater than an air volume in the compression-stroke cylinder 12C while supplying a sufficient volume of air to each of the expansion-stroke cylinder 12A and the compression-stroke cylinder 12C.

For this purpose, in this embodiment, the above intake air volume is adjusted as follows. At Time t2 of the fuel supply interruption, the throttle opening K is set at a larger value (e.g. about 30% of an opening in full throttle) to increase the boost pressure Bt so as to supply a given volume of air to each of the expansion-stroke and compression-stroke cylinders 12A, 12C. Then, at Time t3 when it is confirmed that the engine speed Ne is lowered to a value equal to or less than a reference engine speed N2 (e.g. about 760 rpm), the throttle opening K is reduced.

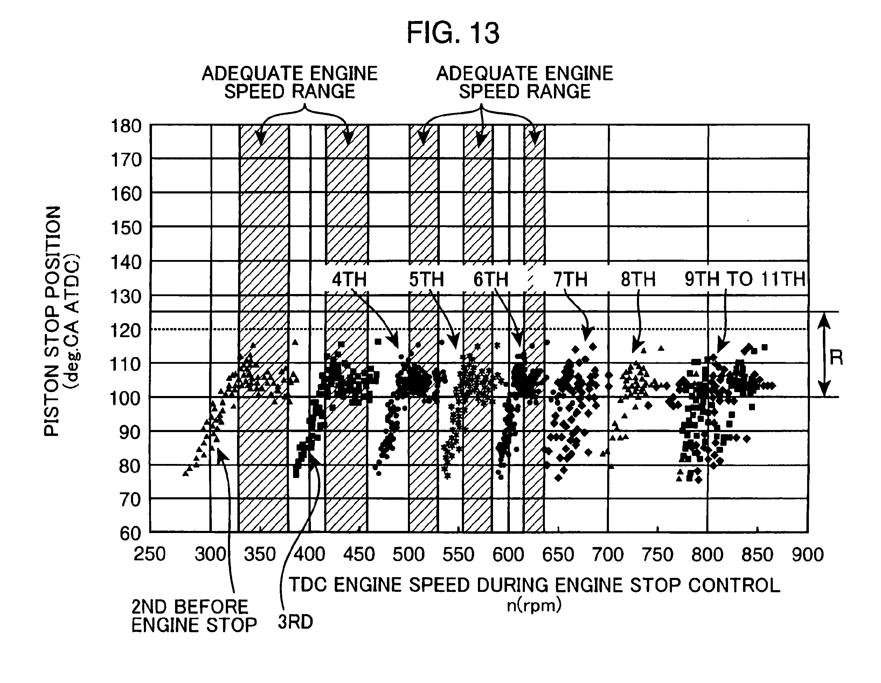

Through an experimental test where a TDC engine speed ne was measured under the conditions that a fuel injection is interrupted at Time t2 when the engine speed Ne becomes equal to the target engine speed N1, and then the throttle valve 24 is kept in an open state for a given time period, and a piston stop position of the expansion-stroke cylinder 12A at a time of engine stop was checked, it was verified that, if sixth to second TDC engine speeds ne to the last TDC engine speed just before stop of the engine fall within a range indicated by hatched lines in FIG. 13, the stop position of the above piston 13 falls within the adequate range R.

Thus, the piston 13 of the expansion-stroke cylinder 12A can be finally stopped within the adequate range R by lowering the engine speed Ne in such a manner that sixth to second TDC engine speeds ne to the last TDC engine speed just before stop of the engine fall within the range indicated by the hatched lines in FIG. 13. In view of performing such a precise control, it is desirable to maximally eliminate external influences acting on the crankshaft 3.

For this purpose, in this embodiment, the automatic transmission mechanism 50 is switched from the drive mode to the neutral mode in advance of Time t2 of the fuel supply interruption to substantially block influences from the driven wheels during the engine stop control. This makes it possible to provide enhanced accuracy in piston stop position in the engine stop control so as to achieve enhanced restart performance. In addition, even during running of the vehicle, the piston can be stopped within an adequate positional range with a higher degree of accuracy to broaden the opportunities for performing the automatic engine stop control and facilitate reductions in fuel consumption and CO₂ emissions.

Although not particularly illustrated, The stop/restart control means 2a in this embodiment is also designed to zero an output power of the alternator 28 so as to block influences due to a load of the alternator 28.

Further, a load to be imposed on the crankshaft 3 may be appropriately adjusted in such a manner that the above TDC engine speeds ne sequentially fall within a range indicated by hatched lines in FIG. 13. For example, an output power of the alternator 28 after being at a zero value may be appropriately increased and reduced to adjust a load to be imposed on the crankshaft 3.

After Time t2 of the fuel injection or supply interruption, the stop/restart control means 2a is operable to read each TDC engine speed ne along with lowering of the engine speed Ne. Then, at Time t4 when the TDC engine speed ne becomes less than a given last TDC criterion N3 (for example, N3 is set at 260 rpm), the stop/restart control means 2a is operable to determine Time t2 to be a time when the piston is moved beyond the last compression TDC (a compression TDC in the expansion-stroke cylinder in this embodiment). That is, after Time t2, while the pistons 13 are moved in the corresponding cylinders 12A to 12D, they are never moved beyond a top dead center (TDC) or a bottom dead center (BDC).

After Time t4, the stop/restart control means 2a is operable to increase the throttle opening K again. Through this operation, the boost pressure Bt is increased to reduce an intake resistance in the intake-stroke cylinder 12D and reduce a load to be imposed on the crankshaft 3. Thus, the pistons of the expansion-stroke cylinder 12A and the compression-stroke cylinder 12C can be smoothly moved so as to be readily stopped within the target adequate range R. After Time t4, the stroke in each of the cylinders 12A to 12D is not changed, and therefore the intake valves 19 of the expansion-stroke cylinder 12A and the compression-stroke cylinder 12C will not be opened. Thus, even if the boost pressure Bt is increased, respective air volumes in the expansion-stroke and compression-stroke cylinders 12A, 12C which have been allocated thereto in a balanced manner will never be changed.

After Time t4, the piston 13 is moved upward/downward several times within the same stroke, and then completely stopped at Time t5. The stop/restart control means 2a is operable to detect the movement of the piston 13 in a period from just before stop of the piston 13 through until complete stop of the piston 13 using the crank angle sensors 30, 31 so as to detect a stop position of the piston 13.

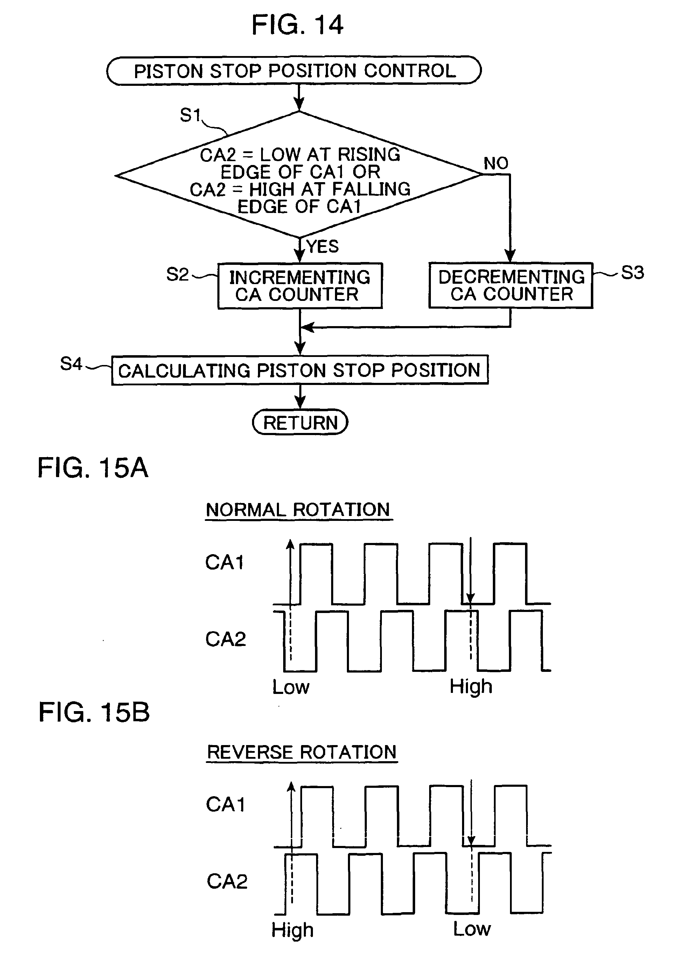

FIG. 14 is a flowchart showing a process of detecting a piston stop position. Upon start of this detection process, based on a first crank angle signal CA1 (signal from the first crank angle sensor 30) and a second crank angle signal CA2 (signal from the second crank angle sensor 31), it is determined whether the second crank angle signal CA2 has a Low level at a rising edge of the first crank angle signal CA1, or whether the second crank angle signal CA2 has a High level at a falling edge of the first crank angle signal CA1 (Step S1). Through this determination, it is discriminated whether respective phases of the signals CA1, CA2 during the engine stop control have a relationship as shown in FIG. 15A or a relationship as shown in FIG. 15B, to determine whether the engine has a normal rotation or a reverse rotation.

Specifically, when the engine has the normal rotation, the second crank angle signal CA2 is generated with a phase lag corresponding to about one-half pulse width relative to the first crank angle signal CA1. Thus, as shown in FIG. 15A, the second crank angle signal CA2 has the Low level at the rising edge of the first crank angle signal CA1, and the second crank angle signal CA2 has the High level at the falling edge of the first crank angle signal CA1. When the engine has the reverse rotation, the second crank angle signal CA2 is generated with a phase lead corresponding to about one-half pulse width relative to the first crank angle signal CA1. Thus, in contrast with the above case where the engine has the normal rotation, as shown in FIG . 15B, the second crank angle signal CA2 has the High level at the rising edge of the first crank angle signal CA1, and the second crank angle signal CA2 has the Low level at the falling edge of the first crank angle signal CA1.

When the determination in Step S1 is YES, a CA counter for counting a crank angle change in the normal rotational direction of the engine is incremented (Step S2). When the determination in Step S1 is NO, the CA counter is decremented (Step S3). Then, after stop of the engine, a count value of the CA counter is checked to determine a piston stop position (Step S4).

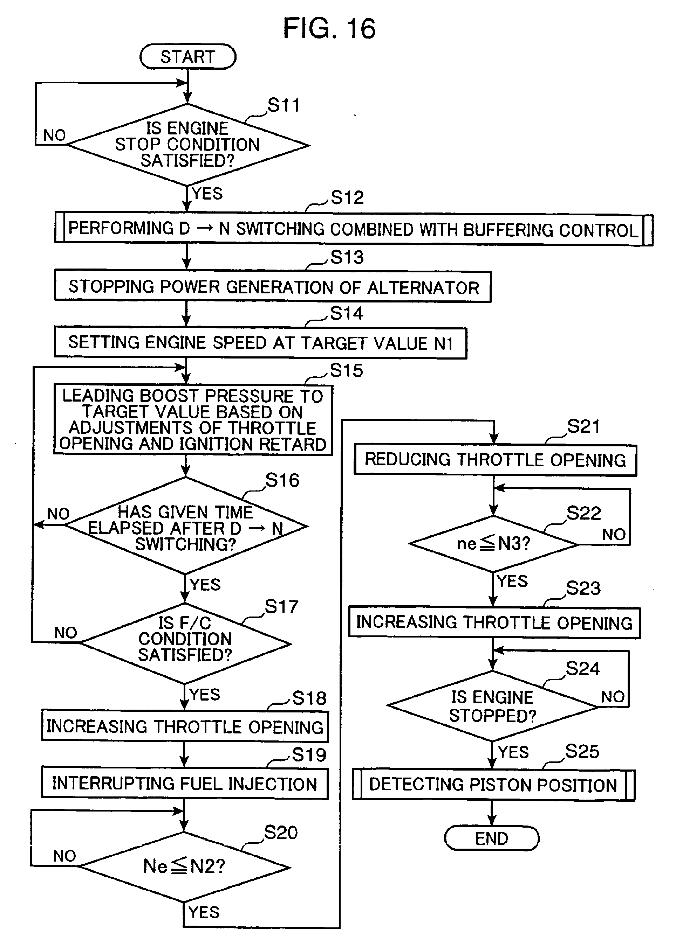

FIG. 16 is a schematic flowchart showing the automatic engine stop control based on the stop/restart control means 2a. Upon start of this control process, based on detection signals output from various sensors, it is determined whether the automatic engine stop condition is satisfied (Step S11). Specifically, the automatic engine stop condition is satisfied when it is determined that: the accelerator is in the OFF state; the brake is in the ON state; the vehicle speed is equal to or less than 17 km/h; a steering angle of the steering wheel is equal to or less than a given value; and the battery voltage is equal to or less than a given value. When the determination in Step 11 is YES, the process advances to Step S12. In Step S12, the switching from the drive mode D to the neutral mode N combined with the buffering control is performed.

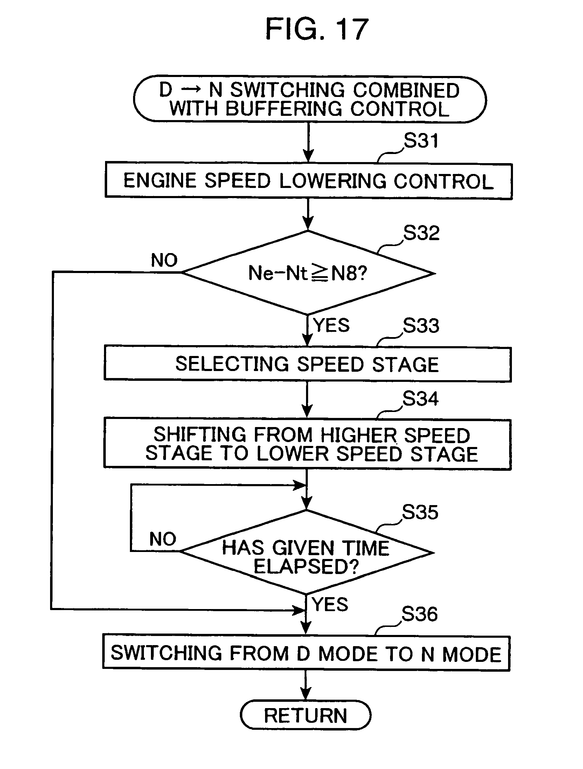

FIG. 17 shows a schematic subroutine of the switching from the drive mode D to the neutral mode N combined with the buffering control in Step S12 of FIG. 16. Upon start of this subroutine, the engine speed lowering control is performed in Step S31. Specifically, the engine speed Ne is controllably adjusted and stabilized at a usual idling speed (650 rpm) regardless of a current value of the engine speed Ne (even if the current value is less than the target engine speed N1).

Then, it is determined whether the following inequality (mathematical condition) is satisfied: (engine speed Ne) - (turbine speed Nt) ≥given value N8 (Step S32). The given value N8 corresponds to a lower limit value of a rotational speed which is likely to cause passenger's uncomfortable feeling due to vibrations to be generated when the automatic transmission mechanism 50 is switched from the drive mode to the neutral mode under the condition that the inequality is satisfied. The given value N8 is experimentally determined.

When the determination in Step S32 is YES, the automatic transmission mechanism 50 is shifted to a lower speed stage to increase the turbine speed Nt. For this purpose, in Step S33, the selection of a speed stage is performed. Specifically, the turbine speed Nt after the speed shift is calculated based on gear ratios before and after the speed shift, and a speed stage capable of avoiding satisfaction of the inequality in Step S32 is selected. For example, when a current speed stage is the 3rd speed stage of the D range, and the satisfaction of the inequality in Step S32 can be avoided by shifting to the 2nd speed stage of the D range, the shift to the 2nd speed stage of the D range is selected. If the satisfaction of the inequality in Step S32 cannot be avoided by shifting to the 2nd speed stage of the D range, the shift to the 1st speed stage of the L range capable of further increasing the turbine speed will be selected. Then, the automatic transmission mechanism 50 is shifted to the selected gear stage (Step S34).

Then, after an elapse of a given time required for engagement/disengagement of the friction elements 67 to 71 for the purpose of speed shifting (YES in Step S35), the automatic transmission mechanism 50 is switched from the drive mode to the neutral mode (Step S36).

On the other hand, when the determination in Step S32 is NO or there is no risk of occurrence of vibrations causing passenger's uncomfortable feeling during the normal D → N switching or D → N switching without the buffering control, the process advances to Step S36 without speed shifting, and the D → N switching is performed in Step S36.

In this manner, the automatic transmission mechanism 50 is switched from the drive mode to the neutral mode while suppressing vibrations causing passenger's uncomfortable feeling. Then, the process returns to the main routine.

Returning to FIG. 16, the description about the engine stop control will be continued. After execution of the subroutine in Step S12, the power generation of the alternator 20 is stopped (Step S 13) to block influences from the alternator 28 to the crankshaft 3.

Then, the engine speed lowering control is terminated, and the engine speed Ne is set at the target engine speed N1 (e.g. N1 = 860 rpm) (Step S14). Then, the throttle opening K is adjusted to lead the boost pressure Bt to a given target value (e.g. in the range of - 400 to - 600 mm Hg). Simultaneously, an ignition timing is retarded to prevent the engine speed Ne from excessively increasing (Step S 15). The retard value is feedback-controlled to allow the engine speed Ne to be adjusted and stabilized at the target engine speed N 1.

The feedback control in Step S 15 will be continued until a given time required for the D → N switching has elapsed (YES in Step S16), and a furl-cut (F/C) condition is satisfied (YES in Step S 17). The F/C condition is satisfied when it is determined that: the satisfaction of the engine stop condition in Step 11 is continued; the engine speed Ne is adjusted at the target engine speed N1; and the boost pressure Bt is adjusted at the above target value.

After satisfaction of the F/C condition, the throttle opening K is increased up to about 30% (Step S 18), and the fuel injection or supply is interrupted (Step S 19).

Subsequently, in order to determine that the engine speed Ne starts lowering, it is determined whether the engine speed Ne becomes equal to or less than the reference speed N2 preset at about 760 rpm (Step S20). Then, at a time (Time t3) when the determination in Step S20 is made as YES, the opening of the throttle valve 23 is reduced (set at about 15%) (Step S21). Consequently, the boost pressure Bt set at a value close to atmospheric pressure by increasing the throttle opening K in Step S 18 starts lowering according to the operation for reducing the throttle opening, with a given time lag.

In place of the above control in this embodiment configured to reduce the throttle opening K at Time t3 when it is determined that the engine speed Ne becomes equal to or less than the reference speed N2 in Step S20, the throttle opening K may be reduced at a time when it is determined that the TDC engine speed ne, or an engine speed when the piston 13 is moved beyond a compression TDC, becomes equal to or less than the reference speed N2.

Then, the TDC engine speeds ne are sequentially read, and it is determined whether the TDC engine speed ne becomes equal to or less than the given value N3 (Step S22). This given value N3 corresponds to an engine speed at a time when the piston is moved beyond the last compression TDC during the course where the engine speed Ne is lowered along a predetermined reference curve. For example, the given value N3 is set at about 260 rpm.

It is determined the piston is moved beyond the last TDC at a time (Time t4) when the TDC engine speed ne determined to be YES in Step S22 becomes equal to or less than the above given value N3.

After Time t4, the throttle opening K is increased again (Step S23). Through this operation, an intake resistance in the intake-stroke cylinder 12D is reduced to lower a load to be imposed on the crankshaft 3. Thus, the pistons of the expansion-stroke cylinder 12A and the compression-stroke cylinder 12C can be smoothly moved so as to be readily stopped within the target adequate range R.

Depending on the conditions about the TDC engine speed ne and/or the boost pressure Bt at Time t4, the reduction of a load to be imposed on the crankshaft 3 does not always facilitate stopping the piston within the adequate range R. In this case, the operation for increasing the throttle opening K in Step S23 may be omitted, or an increment of the throttle opening K may be controllably adjusted.

During the course where the engine speed Ne is further lowered, it is determined whether the engine is stopped (Step S24). At a time when the determination in Step S24 is made as YES, the piston position detection process illustrated in FIG. 14 is performed (Step S25), and then the automatic engine stop control is completed.

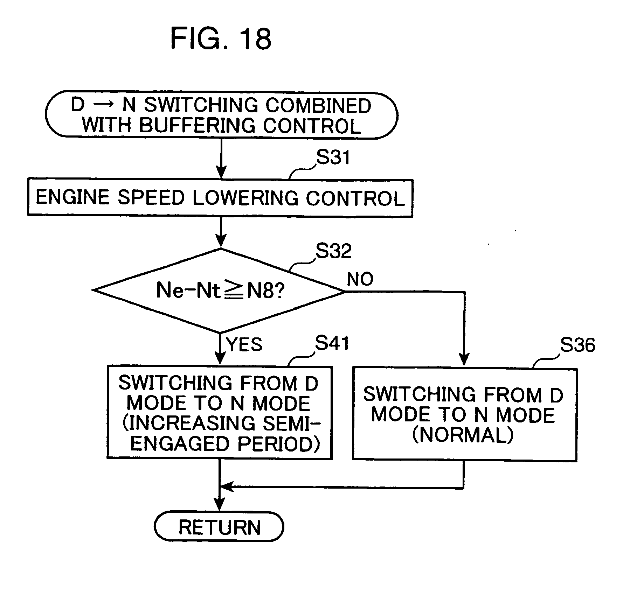

FIG. 18 is a schematic flowchart showing one example of modification of the subroutine illustrated in FIG. 17 for the switching from the drive mode D to the neutral mode N combined with the buffering control. In FIG. 18, the same control step as that of the subroutine illustrated in FIG. 17 is defined by the same reference numeral, and its detailed description will be omitted. Upon start of this subroutine, the engine speed lowering control is performed (Step S31), and then it is determined whether the following inequality is satisfied: (engine speed Ne) - (turbine speed Nt) ≥given value N8, in Step S32.

When the determination in Step S32 is YES, the automatic transmission mechanism 50 is shifted from the drive mode D to the neutral mode N. In this process, a time period for engagement/disengagement (time period of semi-engaged state or semi-engagement period) of each of the friction elements 67 to 71 is increased as a value greater than that in a normal speed shifting. Specifically, a changing rate of an oil pressure to be supplied to or released from each of the friction elements 67 to 71 is reduced using an oil-pressure control element, such as a solenoid valve, of the oil-presser control mechanism 63. This makes it possible to reduce a transmission-torque variation per time during the switching of the automatic transmission mechanism 50 from the drive mode to the neutral mode so as to suppress transient vibrations and passenger's uncomfortable feeling.

When the determination in Step S32 is NO or there is no risk of occurrence of vibrations causing passenger's uncomfortable feeling during the normal D → N switching, the process advances to Step S36 without shifting the automatic transmission mechanism 50, and the D → N switching is performed in Step S36.

In this manner, the automatic transmission mechanism 50 is switched from the drive mode to the neutral mode while suppressing vibrations causing passenger's uncomfortable feeling. Then, the process returns to the main routine.

The above modified control may be performed in place of the subroutine illustrated in FIG. 17. In particular, this control can be effectively used in cases where the vehicle speed V is low (or zero), and therefore it is hardly expected to increase the turbine speed Nt by means of speed shift of the automatic transmission mechanism 50. In addition, this control can be advantageously performed as a transient control without changing the shift map illustrated in FIG. 6.

Further, this control may be combined with the subroutine illustrated in FIG. 17, and designed to increase a semi-engagement period during the D → N switching after the speed shifting, according to need.

A control based on the deceleration fuel-cut control means 2b of the ECU 2 will be described below. The deceleration fuel-cut control means 2b is operable to perform a deceleration fuel-cut control configured to interrupt fuel supply to the engine during vehicle deceleration under a given condition while maintaining engine operation based on the reverse driving force from the driven wheels. In this embodiment, deceleration fuel-cut control means 2b is designed to perform the deceleration fuel-cut control during vehicle deceleration under the conditions that the engine speed Ne is equal to or less than 1200 rpm, and the throttle opening K is a fully-closed value or an approximately fully-closed value.

For example, when the deceleration fuel-cut control is performed in response to satisfaction of the above condition during vehicle running in a state of the 4th speed stage and a lockup mode (where the lockup clutch 64 is engaged with the pump cover 53 to connect the turbine shaft 59 directly to the crankshaft 3), the engine can continue its operation based on the reverse driving force from the driven wheel without fuel supply to the engine. In this embodiment, the deceleration fuel-cut control means 2b is designed to allow the engine speed Ne to be about 1200 rpm when the vehicle speed V is lowered from the above state to a point (point V4 in FIG. 6) where the lockup mode is released, the engine speed Ne. That is, at the point V4, the lockup mode is released, and the deceleration fuel-cut control is terminated to resume the fuel injection. This deceleration fuel-cut control makes it possible to minimize the fuel injection and further facilitate enhancement in fuel economy and reduction in CO₂ emissions.

An operation for performing the above automatic engine stop control subsequently to this deceleration fuel-cut control will be described below. For example, this control is performed in a vehicle running where, in the shift map illustrated in FIG. 6, the deceleration fuel-cut control is terminated at the point V4, and the vehicle is continuously decelerated to the point V2 through the point V3 (4 → 3 shift point) while maintaining the throttle opening K at an approximately fully-closed value, so that the automatic engine stop condition is satisfied at the point V2.

In the above process, the fuel supply is resumed at the point V4, and subsequently the engine speed Ne is controllably adjusted and stabilized at a usual idling speed. This is similar to a state when the engine speed lowering control to be performed in the initial stage of the buffering control is substantially initiated at the point V4 before satisfaction of the automatic engine stop condition. Thus, when the automatic engine stop condition is satisfied, the engine speed Ne has already been sufficiently lowered to provide a condition allowing the effect of the buffering control to be further remarkably obtained.

Further, the fuel supply is resumed before reaching the point V2. Thus, after the buffering control in the automatic engine stop control, the engine speed Ne can be quickly adjusted and stabilized at the target engine speed N1 so as to smoothly perform the automatic engine stop control.

As described above, according to the automatic engine stop control in this embodiment, the automatic transmission mechanism 50 can be switched from the drive mode to the neutral mode to provide enhanced restart performance while suppressing transient vehicle vibrations to be caused by the switching.

As shown in FIG. 4, the 1st speed stage of the automatic transmission mechanism 50 is designed to select either one of a reverse-driving-force non-transmittable path (1st speed stage of the D range) and a reverse-driving-force transmittable path (1st speed stage of the L range). Generally, during a low-speed vehicle running in urban areas, an excessive engine braking becomes a negative factor against driving feeling. In such a case, the vehicle running can be performed using the 1st speed stage of the D range to cut off (preclude) transmission of the reverse driving force so as to suppress an engine braking to obtain excellent driving feeling.

Further, during a low-speed vehicle running on a long downhill, the vehicle running can be performed using the 1st speed stage of the L range to obtain strong engine braking action based on the reverse driving force. In addition, the turbine speed Nt during the buffering control in this embodiment can be increased using the reverse-driving-force transmittable feature.

An engine restarting control will be described below. The stop/restart control means 2a is operable, in response to satisfaction of a given restart condition (e.g. at least one of the conditions of accelerator: ON state; brake: OFF state; and battery voltage: a given value or less) of the engine in a state after being automatically stopped in the above manner, when the piston 13 of the expansion-stroke cylinder 12A is stopped within the adequate range R, to produce an initial combustion in the compression-stroke cylinder 12C so as to reversely move the engine to include an in-cylinder pressure of the expansion-stroke cylinder 12A, and inject/ignite a fuel into/in the expansion-stroke cylinder 12A so as to produce a combustion to automatically restart the automatically-stopped engine.

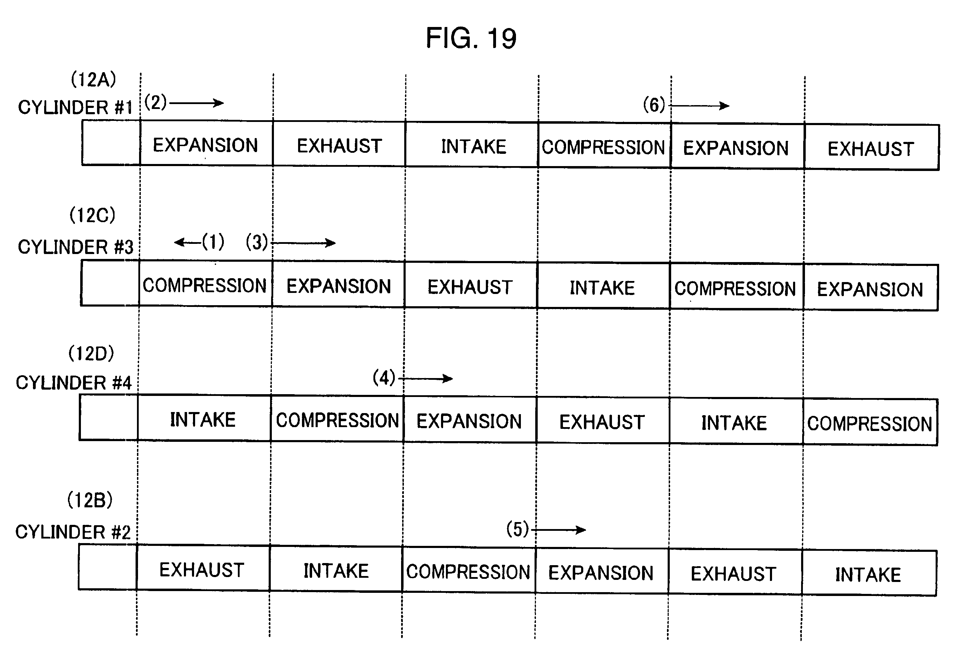

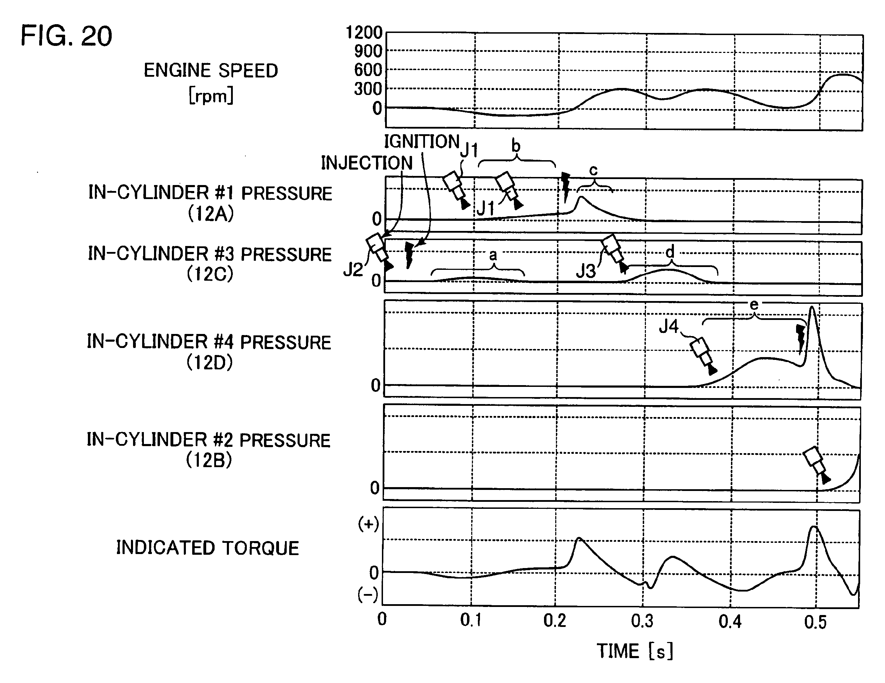

With reference to the time charts of FIGS. 19 and 20, this engine restart control will be described. It is understood that an engine restart control applicable to the present invention is not limited to this engine restart control, but any other suitable conventional engine restart control may be used.

As shown in FIGS. 19 and 20, the first fuel injection J2 is performed in the compression-stroke cylinder 12C (3rd cylinder), and the injected fuel is ignited to produce a combustion therein [(1) in FIG. 19]. Based on a combustion pressure (range "a" in FIG. 20) of the combustion (1), the piston 13 of the compression-stroke cylinder 12C is moved downward toward a BDC, and thereby the engine is driven in the reverse rotational direction.

In conjunction with the reverse movement of the engine, the piston 13 of the expansion-stroke cylinder 12A (1st cylinder) is moved toward a TDC. Then, the piston 13 of the expansion-stroke cylinder 12A is moved toward the TDC (preferably at a position close to the TDC relative to a stroke midpoint) to compress an air in the expansion-stroke cylinder 12A. Latent heat of vaporization of the injected fuel provides a reduced compression pressure to allow the piston 13 to be moved closer to the TDC, so that the density of the compressed air (air-fuel mixture) is increased [range "b" in FIG. 20].

When the piston 13 of the expansion-stroke cylinder 12A is moved sufficiently close to the TDC, the air-fuel mixture in the cylinder 12A is ignited to produce a combustion of the injected fuel (J1) [(2) in FIG. 19], and the engine is driven in the normal rotational direction by the resulting combustion pressure [region "c" in FIG. 20].

Further, a fuel injection (J3) is performed in the compression-stroke cylinder 12C at an appropriate timing to form an air-fuel mixture with a richer air-fuel ratio than a combustible air-fuel ratio [(3) in FIG. 19]. While this injected fuel is not burnt in the compression-stroke cylinder 12C, a compression pressure in the compression-stroke cylinder 12C is reduced by latent heat of vaporization of the injected fuel [region "d" in FIG. 20]. This makes it possible to reduce energy of the initial combustion in the expansion-stroke cylinder 12A which is to be consumed for being moved beyond the compression TDC (first compression TDC after initiation of the restart control).

Furthermore, the timing of a fuel injection (J4) for an intake-stroke cylinder 12D in which the 2nd combustion will be performed is set at an adequate timing [e.g. after the intermediate phase of the compression stroke, as indicated by (4) in FIG. 19] for reducing an in-cylinder temperature and a compression pressure by means of latent heat of vaporization of the injected fuel. This prevents self-ignition which would otherwise occur before the compression TDC during the compression stroke of the intake-stroke cylinder 12D. In addition, an ignition timing in the intake-stroke cylinder 12D is set at the combustion TDC or later [region "e" in FIG. 20] to prevent occurrence of combustion before the combustion TDC. As above, the compression pressure is reduced based on the fuel injection (J4), and no combustion occurs before the compression TDC. This makes it possible to reduce energy of the initial combustion in the expansion-stroke cylinder 12A which is to be consumed for being moved beyond the compression TDC (second compression TDC after initiation of the restart control).

In this manner, energy of the initial combustion [(2) in FIG. 19] in the expansion-stroke cylinder 12A allows the respective pistons of the compression-stroke and intake-stroke cylinders to be moved beyond the first compression TDC [(3) in FIG. 19] and the second compression TDC [(4) in FIG. 19] so as to assure a smooth and reliable restart performance. Subsequently, the engine will resume a normal operation.

While the present invention has be described in connection with the specific embodiment thereof, various modifications and changes may be made without departing from the spirit and scope of the present invention. Some modifications will be described below.
(1) While the engine starting system according to the above embodiment is designed to move the engine in the reverse rotational direction, and then move the engine in the normal rotational direction, during the engine restart control, the restart control may be performed by moving the engine only in the normal rotational direction. However, the operation for moving the engine in the reverse rotational direction can advantageously increase combustion energy in the expansion-stroke cylinder 12A to reliably restart the engine.
(2) While the automatic transmission mechanism 50 in the above embodiment has been described based on a four-speed stage automatic transmission designed to select either one of a reverse-driving-force transmittable mechanism and a reverse-driving-force non-transmittable mechanism only for a 1st speed stage, the present invention is not limited to this structure. For example, the automatic transmission mechanism may be designed to allow such mechanisms to be selected in a 2nd speed stage. Further, the automatic transmission mechanism is not necessarily a four-speed stage automatic transmission, but may be multi-speed stage automatic transmission mechanism other than the four-speed stage type, or may be a continuously variable transmission (CVT).
(3) In cases where a piston stop position is not located within the given adequate range, or is located within the given adequate range but adjacent to the boundary of the given adequate range, or where the engine speed is not increased up to a given value even after a given time has elapsed from initiation of the restart control, or where the initial combustion is performed in the expansion-stroke cylinder without the operation for moving the engine in the reverse rotational direction, a control using a assist device, such as a starter motor [including a motor integrally having a starter and an alternator (ISG: Integrated Starter Generator)] may be employed, but omitted in the above embodiment. In this case, a load of the motor can be reduced by utilizing the combustion energy of the engine. Particularly, in this case, a fuel is preferably injected from a fuel injection valve directly to the cylinders during an intake stroke to allow the injected fuel to be sufficiently vaporized/atomized and mixed with air.
(4) While the engine starting system according to the above embodiment employs an in-cylinder injection-type or direct-injection-type fuel injection valve 16, a port injection-type or manifold injection-type fuel injection valve may also be employed.

## Claims

1. An engine starting system for a vehicle, which includes stop/restart control means (2a), said stop/restart control means (2a) being operable, in response to satisfaction of an automatic engine stop condition predetermined in a manner capable of being satisfied even during running of the vehicle, to perform an automatic engine stop control configured to interrupt a fuel supply for maintaining engine operation so as to automatically stop an engine, said stop/restart control means (2a) being operable, in response to satisfaction of a restart condition for restarting the automatically stopped engine, to produce combustion in at least a cylinder (2A) kept in an expansion stroke after stop of the engine so as to automatically restart the engine, said engine starting system comprising:
an automatic transmission mechanism (50) which is provided with a torque converter (51), and designed to be switchable between a drive mode (D) for permitting a transmission of a driving force from the engine to a driven wheel and a neutral mode (N) for disconnecting a transmission of said driving force, and to be selectably shifted between a plurality of speed ratios;
engine speed detection means (30, 31) for detecting a speed (Ne) of said engine; and
turbine speed detection means (36) for detecting a speed (Nt) of a turbine (55) of said torque converter (51),
wherein said stop/restart control means (2a) is operable, in response to satisfaction of said automatic engine stop condition when said automatic transmission mechanism (50) is in said drive mode (D), to switch said automatic transmission mechanism (50) from said drive mode (D) to said neutral mode (N) in an initial stage of said automatic engine stop control,
**characterized in that**:
in conjunction with said switching, said stop/restart control means (2a) is operable, in an event where the engine speed (Ne) detected by said engine speed detection means (30, 31) is greater, by a given value or more, than the turbine speed (Nt) detected by said turbine speed detection means (36), to perform a buffering control configured to reduce transient vehicle vibrations to be caused by said switching, and, after said buffering control, to interrupt the fuel supply for maintaining engine operation,
said buffering control is configured to be activated during running of the vehicle, and includes a speed shift operation for shifting said automatic transmission mechanism (50) between said speed ratios in advance of the switching from said drive mode (D) to said neutral mode (N), in a manner allowing said turbine speed (Nt) to be increased and
said speed shift operation is designed to shift to one of the speed ratios which is assigned to a lower speed stage (D2) adapted to permit transmission of said reverse driving force from said driven wheel to said turbine.

2. The engine starting system according to claim 1, **characterized in that** said automatic transmission mechanism (50) is designed such that a first speed stage (D1) serving as a relatively low speed stage is established by a reverse-driving-force non-transmittable mechanism adapted to preclude transmission of at least said reverse driving force, and a second speed stage (D2) serving as a higher speed stage than said first speed stage (D1) is established by a reverse-driving-force transmittable mechanism adapted to permit transmission of at least said reverse driving force, wherein:
said speed shift operation is designed to shift from a higher speed stage (D3) than said second speed stage (D2) to said second speed stage (D2) established by said reverse-driving-force transmittable mechanism.

3. The engine starting system according to claim 1, **characterized in that** said automatic transmission mechanism (50) is designed such that a first speed stage (D1, D2) serving as a relatively low speed stage is established by either one selected from a reverse-driving-force non-transmittable mechanism adapted to preclude transmission of said reverse driving force, and a reverse-driving-force transmittable mechanism adapted to permit transmission of said reverse driving force, wherein:
said speed shift operation is designed to shift from a higher speed stage (D3) than said first speed stage (D2) to said first speed stage (D2) established by said reverse-driving-force transmittable mechanism.

4. The engine starting system according to any one of the preceding claims, **characterized in that**:
said automatic transmission mechanism (50) is designed to engage or disengage a frictional engagement element (67 to 71) in conjunction with the switching from said drive mode (D) to said neutral mode (N); and
said buffering control is configured to increase a time period of a semi-engaged state during the engagement or disengagement of said frictional engagement element (67 to 71).

5. The engine starting system according to any one of the preceding claims, **characterized in that**:
said stop/restart control means (2a) is operable to allow the engine speed (Ne) at a time of interrupting said fuel supply to be set at a given target engine speed (N1); and
said buffering control includes an engine-speed lowering control configured to allow the engine speed (Ne) at a time of said switching from the drive mode (D) to the neutral mode (N) to be lowered to a value less than said target engine speed (N1), wherein said buffering control is configured to adjust said lowered engine speed (Ne) at said target engine speed (N1), after said switching.

6. The engine starting system according to claim 5, **characterized by** further comprising deceleration fuel-cut control means (2b) operable, during deceleration of the vehicle under a given condition, to perform a deceleration fuel-cut control configured to cut off a fuel supply to the engine while maintaining engine operation based on the reverse driving force from the driven wheel, wherein:
said stop/restart control means (2a) is operable, when making the transition from said deceleration fuel-cut control to said automatic engine stop control, to resume the fuel supply to the engine and then perform said engine-speed lowering control.

7. The engine starting system according to any one of the preceding claims, **characterized in that** said automatic engine stop condition includes at least two conditions that an accelerator is in a released state, and a foot brake is in an activated state.

## Patentansprüche

1. Motorstartsystem für ein Fahrzeug, das ein Stopp/Neustart-Steuermittel (2a) umfasst, wobei das Stopp/Neustart-Steuermittel (2a) als Reaktion auf das Erfüllen einer Bedingung für automatischen Motorstopp, die so vorbestimmt ist, dass sie auch während des Laufens des Fahrzeugs erfüllt werden kann, betreibbar ist, um eine Steuerung des automatischen Motorstopps auszuführen, die ausgelegt ist, eine Kraftstoffzufuhr zum Aufrechterhalten von Motorbetrieb zu unterbrochen, um einen Motor automatisch zu stoppen, wobei das Stopp/Neustart-Steuermittel (2a) als Reaktion auf das Erfüllen einer Neustartbedingung zum Neustarten des automatisch gestoppten Motors betreibbar ist, um in mindestens einem Zylinder (2A), der nach dem Stopp des Motors in einem Arbeitstakt gehalten wird, Verbrennung zu erzeugen, um den Motor automatisch neu zu starten, wobei das Motorstartsystem umfasst:
einen Automatikgetriebemechanismus (50), der mit einem Drehmomentwandler (51) versehen und ausgelegt ist, um zwischen einem Fahrmodus (D) zum Zulassen einer Übertragung einer Antriebskraft von dem Motor zu einem Antriebsrad und einem neutralen Modus (N) zum Unterbrechen einer Übertragung der Antriebskraft umschaltbar zu sein und zwischen mehreren Übersetzungsverhältnisses wählbar geschaltet zu werden;
Motordrehzahldetektionsmittel (30, 31) zum Detektieren einer Drehzahl (Ne) des Motors; und
Turbinendrehzahlmittel (36) zum Detektieren einer Drehzahl (Nt) einer Turbine (55) des Drehmomentwandlers (51),
wobei das Stopp/Neustart-Steuermittel (2a) als Reaktion auf das Erfüllen der Bedingung für automatischen Motorstopp betreibbar ist, wenn sich der Automatikgetriebemechanismus (50) in dem Fahrmodus (D) befindet, um den Automatikgetriebemechanismus (50) in einer Anfangsphase der Steuerung des automatischen Motorstopps von dem Fahrmodus (D) zu dem neutralen Modus (N) zu schalten,
**dadurch gekennzeichnet, dass**:
in Verbindung mit dem Schalten das Stopp/Neustart-Steuermittel (2a) in einem Fall, da die von dem Motordrehzahldetektionsmittel (30, 31) detektierte Motordrehzahl (Ne) um einen vorgegebenen Wert oder mehr größer als die von dem Turbinendrehzahldetektionsmittel (36) detektierte Turbinendrehzahl (Nt) ist, eine Puffersteuerung auszuführen, die ausgelegt ist, um transiente Fahrzeugvibrationen zu verringern, die durch das Schalten hervorgerufen würden, und nach der Puffersteuerung die Kraftstoffzufuhr zum Aufrechterhalten von Motorbetrieb zu unterbrechen,
die Puffersteuerung ausgelegt ist, während des Laufens des Fahrzeugs aktiviert zu werden, und einen Übersetzungsumschaltbetrieb zum Umschalten des Automatikgetriebemechanismus (50) zwischen den Übersetzungsverhältnissen vor dem Schalten von dem Fahrmodus (D) zu dem neutralen Modus (N) in einer Weise, die ein Anheben der Turbinendrehzahl (Nt) zulässt, umfasst, und
der Übersetzungsumschaltbetrieb ausgelegt ist, zu einem der Übersetzungsverhältnisse, das einer niedrigeren Übersetzungsstufe (D2) zugeordnet ist, die zum Zulassen der Übertragung der Rückwärtsfahrkraft von dem Antriebsrad zu der Turbine ausgelegt ist, zu schalten.

2. Motorstartsystem nach Anspruch 1, **dadurch gekennzeichnet, dass** der Automatikgetriebemechanismus (50) so ausgelegt ist, dass eine erste Übersetzungsstufe (D1), die als relativ niedrige Übersetzungsstufe dient, durch einen Rückwärtsfahrkraft nicht übertragen könnenden Mechanismus hergestellt wird, der ausgelegt ist, um eine Übertragung von mindestens der Rückwärtsfahrkraft auszuschließen, und eine zweite Übersetzungsstufe (D2), die als höhere Übersetzungsstufe als die erste Übersetzungsstufe (D1) dient, durch einen Rückwärtsfahrkraft übertragen könnenden Mechanismus hergestellt wird, der ausgelegt ist, um die Übertragung von mindestens der Rückwärtsfahrkraft zuzulassen, wobei:
der Übersetzungsschaltbetrieb ausgelegt ist, von einer höheren Übersetzungsstufe (D3) als der zweiten Übersetzungsstufe (D2) zu der zweiten Übersetzungsstufe (D2), die durch den Rückwärtsfahrkraft übertragen könnenden Mechanismus hergestellt wird, zu schalten.

3. Motorstartsystem nach Anspruch 1, **dadurch gekennzeichnet, dass** der Automatikgetriebemechanismus (50) so ausgelegt ist, dass eine erste Übersetzungsstufe (D1, D2), die als relativ niedrige Übersetzungsstufe dient, durch einen gewählt aus einem Rückwärtsfahrkraft nicht übertragen könnenden Mechanismus, der ausgelegt ist, um eine Übertragung der Rückwärtsfahrkraft auszuschließen, und einem Rückwärtsfahrkraft übertragen könnenden Mechanismus, der ausgelegt ist, um die Übertragung der Rückwärtsfahrkraft zuzulassen, hergestellt wird, wobei:
der Übersetzungsschaltbetrieb ausgelegt ist, von einer höheren Übersetzungsstufe (D3) als der ersten Übersetzungsstufe (D2) zu der ersten Übersetzungsstufe (D2), die durch den Rückwärtsfahrkraft übertragen könnenden Mechanismus hergestellt wird, zu schalten.

4. Motorstartsystem nach einem der vorhergehenden Ansprüche, **dadurch gekennzeichnet, dass**:
der Automatikgetriebemechanismus (50) ausgelegt ist, um ein Reibschlusselement (67 bis 71) in Verbindung mit dem Schalten von dem Fahrmodus (D) zu dem neutralen Modus (N) einzurücken oder auszurücken; und
die Puffersteuerung ausgelegt ist, um einen Zeitraum eines halb eingerückten Zustands während des Einrückens oder Ausrückens des Reibschlusselements (67 bis 71) zu vergrößern.

5. Motorstartsystem nach einem der vorhergehenden Ansprüche, **dadurch gekennzeichnet, dass**:
das Stopp/Neustart-Steuermittel (2a) betreibbar ist, um das Einstellen der Motordrehzahl (Ne) bei einem Zeitpunkt des Unterbrechens der Kraftstoffzufuhr auf eine vorgegebene Motorsolldrehzahl (N1) zuzulassen; und
die Puffersteuerung eine Motordrehzahlabsenksteuerung umfasst, die ausgelegt ist, um ein Absenken der Motordrehzahl (Ne) bei einem Zeitpunkt des Schaltens von dem Fahrmodus (D) zu dem neutralen Modus (N) auf einen Wert, der niedriger als die Motorsolldrehzahl (N1) ist, zuzulassen, wobei die Puffersteuerung ausgelegt ist, um die abgesenkte Motordrehzahl (Ne) nach dem Schalten bei der Motorsolldrehzahl (N1) anzupassen.

6. Motorstartsystem nach Anspruch 5, **dadurch gekennzeichnet, dass** es weiterhin ein Schubabschaltungssteuermittel (2b) umfasst, das während Schiebebetrieb des Fahrzeugs unter einer vorgegebenen Bedingung betreibbar ist, um eine Schubabschaltungssteuerung auszuführen, die ausgelegt ist, um eine Kraftstoffzufuhr zu dem Motor zu unterbinden, während beruhend auf der Rückwärtsfahrkraft von dem Antriebsrad Motorbetrieb beizubehalten, wobei:
das Stopp/Neustart-Steuermittel (2a) bei Durchführen des Wechsels von der Schubabschaltungssteuerung zu der Steuerung des automatischen Motorstopps betreibbar ist, um die Kraftstoffzufuhr zu dem Motor wiederaufzunehmen und dann die Absenksteuerung der Motordrehzahl auszuführen.

7. Motorstartsystem nach einem der vorhergehenden Ansprüche, **dadurch gekennzeichnet, dass** die Bedingung für automatischen Motorstopp mindestens zwei Bedingungen umfasst, dass ein Gaspedal sich in einem freigegebenen Zustand befindet und sich eine Fußbremse in einem aktivierten Zustand befindet.

## Revendications

1. Système de démarrage de moteur destiné à un véhicule, qui comporte un moyen de commande d'arrêt/de redémarrage (2a), ledit moyen de commande d'arrêt/de redémarrage (2a) étant actionnable afin de répondre à une condition d'arrêt automatique du moteur prédéterminée de manière à pouvoir y répondre même pendant la marche du véhicule, pour exécuter une commande d'arrêt automatique du moteur configurée pour interrompre une alimentation en carburant destinée à maintenir le fonctionnement du moteur afin d'arrêter automatiquement un moteur, ledit moyen de commande d'arrêt/de redémarrage (2a) étant actionnable afin de répondre à une condition de redémarrage destinée à redémarrer le moteur arrêté automatiquement, pour produire la combustion dans au moins un cylindre (2A) gardé dans une course de détente après l'arrêt du moteur afin de redémarrer automatiquement le moteur, ledit système de démarrage de moteur comprenant :
un mécanisme de transmission automatique (50) qui est équipé d'un convertisseur de couple (51), et conçu pour être commutable entre un mode de commande (D) destiné à permettre une transmission d'une force motrice du moteur à une roue motrice et un mode neutre (N) destiné à la déconnexion d'une transmission de ladite force motrice, et pour être déplacé de manière sélectionnable entre une pluralité de rapports de transmission ;
un moyen de détection de la vitesse de moteur (30, 31) destiné à détecter une vitesse (Ne) dudit moteur ; et
un moyen de détection de la vitesse de turbine (36) destiné à détecter une vitesse (Nt) d'une turbine (55) dudit convertisseur de couple (51),
dans lequel ledit moyen de commande d'arrêt/de redémarrage (2a) est actionnable afin de répondre à ladite condition d'arrêt automatique du moteur lorsque ledit mécanisme de transmission automatique (50) est audit mode de commande (D), pour commuter ledit mécanisme de transmission automatique (50) dudit mode de commande (D) audit mode neutre (N) à une graduation initiale de ladite commande d'arrêt automatique du moteur,
**caractérisé en ce que** :
en conjonction avec ladite commutation, ledit moyen de commande d'arrêt/de redémarrage (2a) est actionnable, dans un cas où la vitesse de moteur (Ne) détectée par ledit moyen de détection de la vitesse de moteur (30, 31) est plus grande d'une valeur donnée ou plus que la vitesse de turbine (Nt) détectée par ledit moyen de détection de la vitesse de turbine (36), pour exécuter une commande de ressort configurée pour réduire les vibrations transitoire du véhicule susceptibles d'être entrainées par ladite commutation, et, après ladite commande de ressort, pour interrompre l'alimentation en carburant destinée à maintenir le fonctionnement du moteur,
ladite commande de ressort est configurée pour être activée pendant la marche du véhicule, et comporte une opération de changement de vitesse destinée à déplacer ledit mécanisme de transmission automatique (50) entre lesdits rapports de transmission en avance de la commutation dudit mode de commande (D) audit mode neutre (N), d'une manière permettant l'augmentation de ladite vitesse de turbine (Nt) et
ladite opération de changement de vitesse est conçue pour passer à l'un des rapports de transmission qui est assigné à une graduation de vitesse (D2) inférieure adaptée à permettre la transmission de ladite force motrice inverse de ladite roue motrice à ladite turbine.

2. Système de démarrage de moteur selon la revendication 1, **caractérisé en ce que** ledit mécanisme de transmission automatique (50) est conçu de manière telle qu'une première graduation de vitesse (D1) servant de graduation de vitesse relativement basse est établie par un mécanisme non-transmissible de force motrice inverse adapté à prévenir la transmission d'au moins ladite force motrice inverse, et qu'une seconde graduation de vitesse (D2) servant de graduation de vitesse plus élevée que ladite première graduation de vitesse (D1) est établie par un mécanisme transmissible de force motrice inverse adapté à permettre la transmission d'au moins ladite force motrice inverse, dans lequel :
ladite opération de changement de vitesse est conçue pour passer d'une graduation de vitesse (D3) plus élevée que ladite seconde graduation de vitesse (D2) à ladite seconde graduation de vitesse (D2) établie par ledit mécanisme transmissible de force motrice inverse.

3. Système de démarrage de moteur selon la revendication 1, **caractérisé en ce que** ledit mécanisme de transmission automatique (50) est conçu de manière telle qu'une première graduation de vitesse (D1, D2) servant de graduation de vitesse relativement basse est établie aussi bien par l'un des éléments sélectionnés à partir d'un mécanisme non-transmissible de force motrice inverse adapté à prévenir la transmission de ladite force motrice inverse, que d'un mécanisme transmissible de force motrice inverse adapté à permettre la transmission de ladite force motrice inverse, dans lequel :
ladite opération de changement de vitesse est conçue pour passer d'une graduation de vitesse (D3) plus élevée que ladite première graduation de vitesse (D2) à ladite première graduation de vitesse (D2) établie par ledit mécanisme transmissible de force motrice inverse.

4. Système de démarrage de moteur selon une quelconque des revendications précédentes, **caractérisé en ce que** :
ledit mécanisme de transmission automatique (50) est conçu pour engager ou désengager un élément d'engagement par friction (67 à 71) en conjonction avec la commutation dudit mode de commande (D) audit mode neutre (N) ; et
ladite commande de ressort est configurée pour augmenter une période de temps d'un état semi-engagé pendant l'engagement ou le désengagement dudit élément d'engagement par friction (67 à 71).

5. Système de démarrage de moteur selon une quelconque des revendications précédentes, **caractérisé en ce que** :
ledit moyen de commande d'arrêt/de redémarrage (2a) est actionnable pour permettre le réglage de la vitesse de moteur (Ne) au moment d'interruption de ladite alimentation en carburant à une vitesse de moteur cible (N1) donnée ; et
ladite commande de ressort comporte une commande de baisse de la vitesse de moteur configurée pour permettre la baisse de la vitesse de moteur (Ne), à un moment de ladite commutation du mode de commande (D) au mode neutre (N), à une valeur inférieure à ladite vitesse de moteur cible (N1), dans lequel ladite commande de ressort est configurée pour ajuster ladite vitesse de moteur (Ne) réduite à ladite vitesse de moteur cible (N1) après ladite commutation.

6. Système de démarrage de moteur selon la revendication 5, **caractérisé en ce qu'**il comprend par ailleurs un moyen de commande de coupure d'alimentation en carburant pour décélération (2b) actionnable, pendant la décélération du véhicule sous une condition donnée, pour exécuter une commande de coupure d'alimentation en carburant pour décélération, configurée pour couper une alimentation en carburant vers le moteur tout en maintenant le fonctionnement du moteur basé sur la force motrice inverse à partir de la roue motrice, dans lequel :
ledit moyen de commande d'arrêt/de redémarrage (2a) est actionnable, en faisant la transition de ladite commande de coupure d'alimentation en carburant pour décélération à ladite commande d'arrêt automatique du moteur, pour abréger l'alimentation en carburant vers le moteur et exécuter ensuite ladite commande de baisse de la vitesse de moteur.

7. Système de démarrage de moteur selon une quelconque des revendications précédentes, **caractérisé en ce que** ladite condition d'arrêt automatique du moteur comporte au moins deux conditions, qu'un accélérateur est à un état relâché, et qu'une pédale de frein est à un état activé.
